(19) Europäisches Patentamt
European Patent Office
Office européen des brevets

(11) **EP 4 697 481 A2**

(12) **EUROPEAN PATENT APPLICATION**

(43) Date of publication:
**18.02.2026 Bulletin 2026/08**

(21) Application number: **25193573.0**

(22) Date of filing: **01.08.2025**

(51) International Patent Classification (IPC):
**H01M 50/509** (2021.01)    **H01M 10/44** (2006.01)
**H01M 10/48** (2006.01)    **H01M 50/213** (2021.01)
**H01M 50/247** (2021.01)    **H01M 10/42** (2006.01)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **12.08.2024 US 202463682131 P**

(71) Applicant: **Black & Decker, Inc.**
**New Britain, CT 06053 (US)**

(72) Inventors:
• **Armacost, Craig A.**
  **Parkton, 21120 (US)**
• **Copenhaver, Mark A.**
  **Reisterstown, 21136 (US)**

(74) Representative: **Slingsby Partners LLP**
**1 Kingsway**
**London WC2B 6AN (GB)**

(54) **BATTERY PACK FOR POWER TOOL**

(57)    A battery pack that is configured to provide electrical power to an electric motor is provided. The battery pack includes a battery pack housing, a cell holder subassembly received in the battery pack housing, and a plurality of tabless cylindrical battery cells received in the cell holder subassembly. The battery pack has a nominal voltage of at least 18 V and a race condi- tion-constant power of at least 250 W.

FIG. 1

EP 4 697 481 A2

**Description**

**CROSS-REFERENCE TO RELATED APPLICATIONS**

This application claims priority to U.S. Provisional Patent Application No. 63/682,131, filed on August 12, 2024, which is incorporated by reference in its entirety herein.

**FIELD**

The patent application relates to battery packs, specifically, to battery packs for power tools.

**BACKGROUND**

It is known that there are cordless power tools that are powered by a removable and rechargeable battery pack. Conventional removable, rechargeable battery packs include a housing and a battery - sometimes referred to as a core pack. The battery includes a plurality of battery cells. The present patent application provides improvements in the battery packs.

As is well known, while connecting a set of battery cells in series does alter the voltage of the connected set of battery cells, it does not alter the capacity of the connected set of battery cells. As is also well known, while connecting a set of battery cells in parallel does not alter the voltage of the connected set of battery cells, it does alter the capacity of the connected set of battery cells. For example, two battery cells, each having a nominal voltage of 3.7 V and a capacity of 1 Ah, when connected in series will have a combined voltage of 7.4 V and a combined capacity of 1 Ah and when connected in parallel will have a combined voltage of 3.7 V and a combined capacity of 2 Ah.

When testing the capabilities of a power system/source/supply (i.e., battery pack), a load must be connected to the output of the battery pack. An example electronic load is a test instrument designed to sink current and absorb power out of the battery pack. If the battery pack is used to power an electrical device, the electronic load is used to test the battery pack by emulating the (electrical) device under test (DUT). The electronic load may be a DC electronic load or a programable DC electronic load. The electronic load may be configured to plug into the output from the battery pack and may function like a programmable power sink. The electronic load may have different operational modes for different applications. For example, the operational modes may include constant current (CC) operational mode, constant power (CP) operational mode, etc.

In the constant current (CC) operational mode, the electronic load may be configured to adjust its equivalent DC resistance in order to ensure a constant current is received at the input, regardless of the voltage output from the DUT. This would commonly be used for testing battery discharge currents. The current value set in the constant current operational mode may be an input current limit. By adjusting the value of the target voltage and maintaining constant current at the inputs, the power delivered from the DUT can be measured; this would just be the product of the DUT's output current and the voltage limit set of the DC load's front panel.

In the constant power (CP) operational mode, the electronic load may be configured to maintain a constant power draw. By setting the power draw to a specific value, the DUT can be used with manual voltage adjustment, and the current will adjust to ensure that the power (using the equation $P = IV$, where $P$ is power, $I$ is current, and $V$ is voltage) remains constant.

**SUMMARY**

One aspect of the present patent application provides a battery pack configured to provide electrical power to an electric motor. The battery pack comprises a battery pack housing, a cell holder subassembly received in the battery pack housing, and a plurality of tabless cylindrical battery cells received in the cell holder subassembly. The battery pack has a nominal voltage of at least 18 V and a power$_{CP}$ of at least 250 W.

Implementations of the foregoing aspects may include one or more of the following features.

In an aspect of the present patent application, the power$_{CP}$ may be in a range of approximately 250 W to approximately 1060 W.

In an aspect of the present patent application, the power$_{CP}$ may be approximately 1060 W.

Another aspect of the present patent application provides a battery pack configured to provide electrical power to an electric motor. The battery pack comprises a battery pack housing, a cell holder subassembly received in the battery pack housing, and a plurality of cylindrical battery cells received in the cell holder subassembly. The cell holder subassembly has a cell holder subassembly volume. The battery pack has a nominal voltage of at least 18 V and when fully charged, has a delivered energy of at least approximately 240 kJ and a ratio of the delivered energy to the cell holder subassembly volume of at least 1000 kJ/L.

Implementations of the foregoing aspects may include one or more of the following features.

In an aspect of the present patent application, the ratio of the delivered energy to the cell holder subassembly volume may be in a range of approximately 1000 kJ/L to approximately 1675 kJ/L.

In an aspect of the present patent application, the ratio of the delivered energy to the cell holder subassembly volume may be approximately 1675 kJ.

In an aspect of the present patent application, the battery pack may further comprise a $power_{CP}$ of at least 550 W.

In an aspect of the present patent application, the $power_{CP}$ may be in a range of approximately 550 W to approximately 1060 W.

In an aspect of the present patent application, the $power_{CP}$ may be approximately 1060 W.

Another aspect of the present patent application provides a battery pack configured to provide electrical power to an electric motor. The battery pack comprises a battery pack housing, a cell holder subassembly received in the battery pack housing, and a plurality of cylindrical battery cells received in the cell holder subassembly. The cell holder subassembly has a cell holder subassembly volume. The battery pack has a nominal voltage of at least 18 V and having a $power_{CP}$ of at least 550 W and a ratio of a $power_{CP}$ to the cell holder subassembly volume of at least 2500 W/L.

Implementations of the foregoing aspects may include one or more of the following features.

In an aspect of the present patent application, the ratio of the $power_{CP}$ to the cell holder subassembly volume may be in a range of approximately 2500 W/L to approximately 4000 W/L.

In an aspect of the present patent application, the ratio of the $power_{CP}$ to the cell holder subassembly volume may be approximately 4000 W/L.

Another aspect of the present patent application provides a battery pack configured to provide electrical power to an electric motor. The battery pack comprises a battery pack housing, a cell holder subassembly received in the battery pack housing, and a plurality of cylindrical battery cells received in the cell holder subassembly. The battery pack has a nominal voltage of at least 18 V and a ratio of delivered energy to battery pack maximum stored energy (100% SOC) of at least 50%.

Implementations of the foregoing aspects may include one or more of the following features.

In an aspect of the present patent application, the ratio of delivered energy to battery pack maximum stored energy may be in a range of approximately 50% to approximately 82%.

In an aspect of the present patent application, the ratio of delivered energy to battery pack maximum stored energy may be approximately 82%.

Another aspect of the present patent application provides a battery pack configured to provide electrical power to an electric motor. The battery pack comprises a battery pack housing, a cell holder subassembly received in the battery pack housing, and a plurality of cylindrical battery cells received in the cell holder subassembly. The battery pack has a nominal voltage of at least 18 V and a ratio of delivered energy to pack capacity of at least 40 kJ/Ah.

Implementations of the foregoing aspects may include one or more of the following features.

In an aspect of the present patent application, the ratio of delivered energy to pack capacity may be in a range of approximately 40 kJ/Ah to approximately 62 kJ/Ah.

In an aspect of the present patent application, the ratio of delivered energy to pack capacity may be approximately 62 kJ/Ah.

Another aspect of the present patent application provides a battery pack configured to provide electrical power to an electric motor. The battery pack comprises a battery pack housing, a cell holder subassembly received in the battery pack housing, and a plurality of cylindrical battery cells received in the cell holder subassembly. The battery pack has a nominal voltage of at least 18 V and a ratio of the $power_{CP}$ to nominal power of at least 60%.

Implementations of the foregoing aspects may include one or more of the following features.

In an aspect of the present patent application, the ratio of the $power_{CP}$ to nominal power may be in a range of approximately 60% to approximately 72%.

In an aspect of the present patent application, the ratio of the $power_{CP}$ to nominal power may be approximately 72%.

Another aspect of the present patent application provides a battery pack configured to provide electrical power to an electric motor. The battery pack comprises a battery pack housing a cell holder subassembly received in the battery pack housing, and a plurality of cylindrical battery cells received in the cell holder subassembly. The battery pack has a nominal voltage of at least 18 V and a ratio of the $power_{CP}$ to pack capacity of at least 100 W/Ah.

Implementations of the foregoing aspects may include one or more of the following features.

In an aspect of the present patent application, the ratio of the $power_{CP}$ to pack capacity may be in a range of approximately 100 W/Ah to approximately 155 W/Ah.

In an aspect of the present patent application, the ratio of the $power_{CP}$ to pack capacity may be approximately 155 W/Ah.

Another aspect of the present patent application provides a battery pack configured to provide electrical power to an electric motor. The battery pack comprises a battery pack housing a cell holder subassembly received in the battery pack housing, and a plurality of cylindrical battery cells received in the cell holder subassembly. The battery pack has a nominal voltage of at least 18 V and a delivered energy is at least 175 kJ.

Implementations of the foregoing aspects may include one or more of the following features.

In an aspect of the present patent application, the delivered energy may be in a range of approximately 175 kJ to approximately 500 kJ.

In an aspect of the present patent application, the plurality of cylindrical battery cells may have a 5S2P configuration and the delivered energy may be at least 300 kJ.

In an aspect of the present patent application, the plurality of cylindrical battery cells may have a 5S2P configuration and the delivered energy may be in a range of approximately 300 kJ to approximately 500 kJ.

In an aspect of the present patent application, the plurality of cylindrical battery cells may have a 5S2P configuration and the delivered energy may be approximately 500 kJ.

Another aspect of the present patent application provides a battery pack configured to provide electrical power to an electric motor. The battery pack comprises a battery pack housing, a cell holder subassembly received in the battery pack housing, and a plurality of cylindrical battery cells received in the cell holder subassembly and having a 5S2P configuration. The battery pack has a nominal voltage of at least 18 V and a power$_{CP}$ of at least 500 W.

Implementations of the foregoing aspects may include one or more of the following features.

In an aspect of the present patent application, the power$_{CP}$ may be in a range of approximately 500 W to approximately 1060 W.

In an aspect of the present patent application, the power$_{CP}$ may be approximately 1060 W.

Another aspect of the present patent application provides a battery pack configured to provide electrical power to an electric motor. The battery pack comprises a battery pack housing, a cell holder subassembly received in the battery pack housing, and a plurality of cylindrical battery cells received in the cell holder subassembly. The battery pack has a nominal voltage of at least 18 V and a charging rate (current) of at least 6 A per string of cells, or the battery pack has a nominal voltage of at least 18 V and a charging rate (current) of at least 8 A per string of cells.

Another aspect of the present patent application provides a battery pack configured to provide electrical power to an electric motor. The battery pack comprises a battery pack housing, a cell holder subassembly received in the battery pack housing, and a plurality of cylindrical battery cells received in the cell holder subassembly. The battery pack having a nominal voltage of at least 18 V and a battery pack cycle life of at least 500 cycles.

Implementations of the foregoing aspects may include one or more of the following features.

In an aspect of the present patent application, the battery pack cycle life may be in a range of approximately 500 cycles to approximately 1100 cycles.

In an aspect of the present patent application, the battery pack cycle life may be approximately 1100 cycles. The battery pack as described in any aspect herein, wherein powerCP may be defined as the highest power set on an electronic load for which a battery pack will fully discharge, prior to reaching an overtemperature threshold. powerCP may be determined by: connecting a fully charged (100% SOC) battery pack to the electronic load set to a specific power value, and discharging the battery pack until: (1) the battery pack reaches the undervoltage threshold, or (2) the battery pack reaches the overtemperature threshold. The undervoltage threshold may be 2V per battery cell. The overtemperature threshold may be 70°C.

These and other aspects of the present patent application, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. In one embodiment of the present patent application, the structural components illustrated herein are drawn to scale. It is to be expressly understood, however, that the drawings are for the purpose of illustration and description only and are not intended as a definition of the limits of the present patent application. It shall also be appreciated that the features of one embodiment disclosed herein can be used in other embodiments disclosed herein. As used in the specification and in the claims, the singular form of "a", "an", and "the" include plural referents unless the context clearly dictates otherwise.

Other aspects, features, and advantages of the present patent application will become apparent from the following detailed description, the accompanying drawings, and the appended claims.

Each of the aspects described above and in the following description can be used in any combination of one or more of these aspects, as will be understood to a person of ordinary skill in the art.

## BRIEF DESCRIPTION OF THE DRAWINGS

FIG. 1 shows a system that includes an example power tool, an example battery pack and an example battery pack charger in accordance with an embodiment of the present patent application;

FIGs. 2 and 3 show an example battery pack in accordance with an embodiment of the present patent application;

FIG. 4 shows an exploded view of the battery pack of FIGs. 2 and 3;

FIGs. 5 and 6 show top isometric views of a corepack of the battery pack of FIGs. 2 and 3;

FIG. 7 shows a top isometric view of a cell holder subassembly of the core pack of FIGS. 2 and 3;

FIGS. 8 and 9 show an example battery pack in accordance with another embodiment of the present patent application;

FIG. 10 shows an exploded view of the battery pack of FIGs. 8 and 9;

FIGS. 11 and 12 show top perspective views of a corepack of the battery pack of FIGs. 8 and 9;

FIG. 13 shows a top isometric view of a cell holder subassembly of the corepack of FIGs. 8 and 9;

FIG. 14 shows various parameters and their corresponding values of the battery packs of FIGs. 2 - 7 and 8 - 13;

FIGs. 15A and 15B show a graph and a table of results of an example application of a race condition-constant current procedure applied to the example battery pack of FIGs. 2 - 8;

FIGs. 16A and 16B show a graph and a table of results of an example application of a race condition-constant power procedure applied to the example battery pack of FIGs. 2 - 8; and

FIGs. 17A and 17B show graphs of results of an example application of a cycle life protocol applied to the example battery pack of FIGs. 2 - 8.

## DETAILED DESCRIPTION

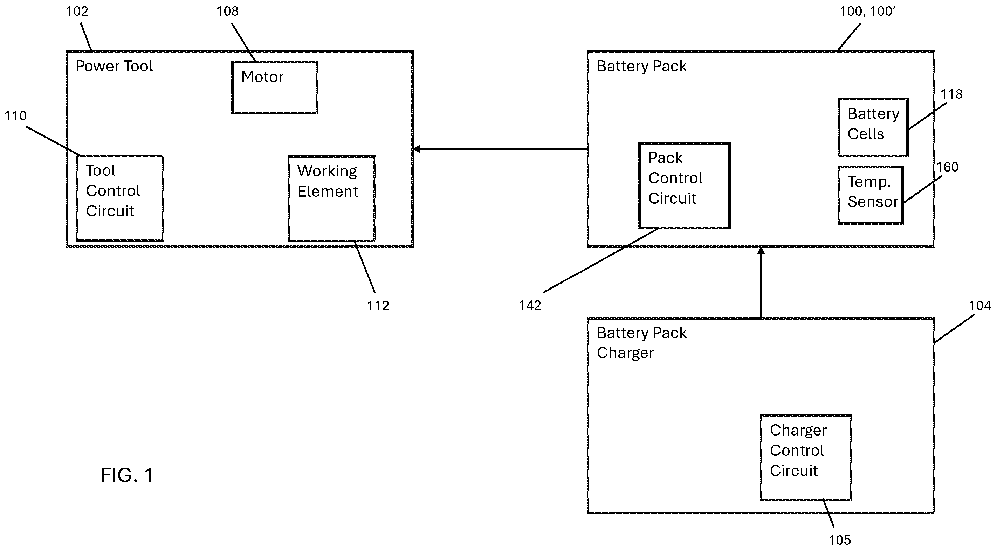

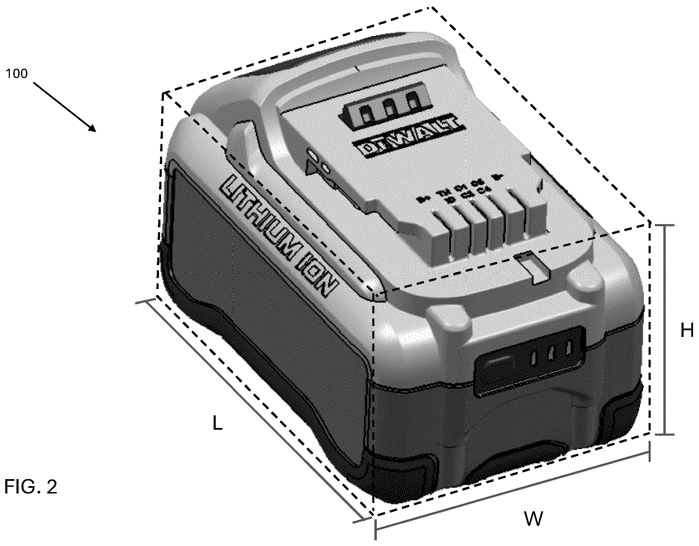

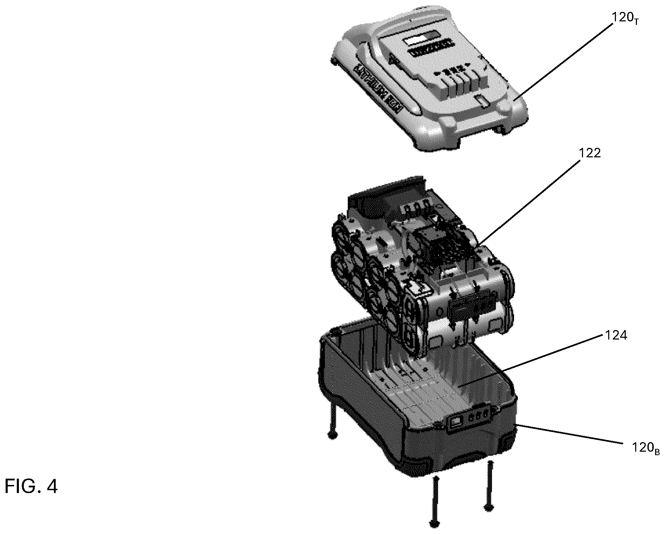

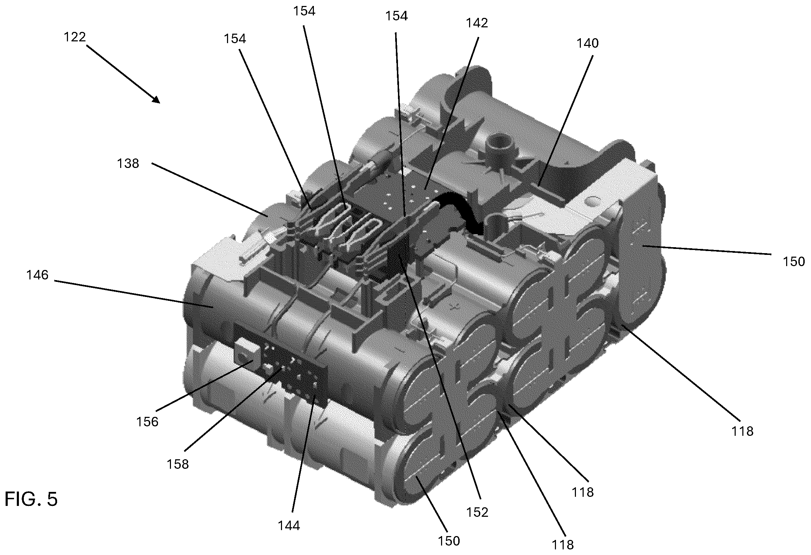

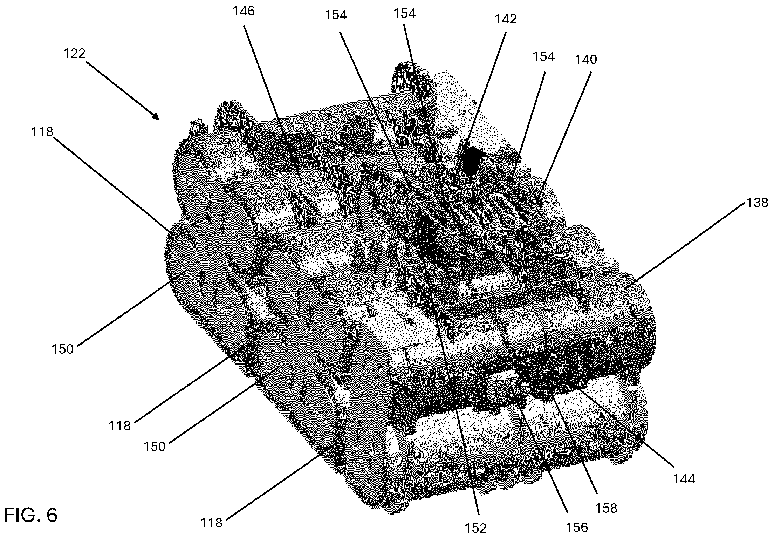

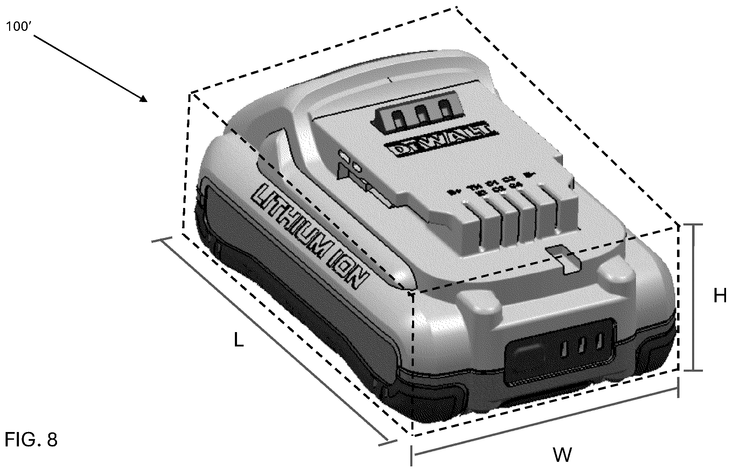

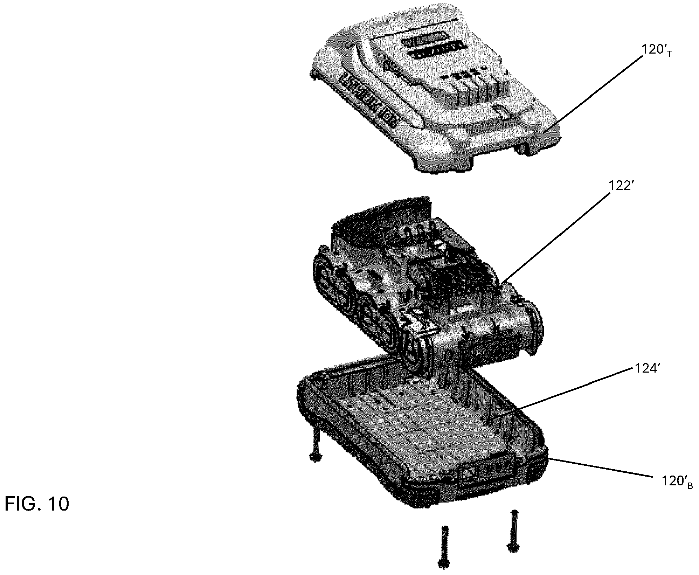

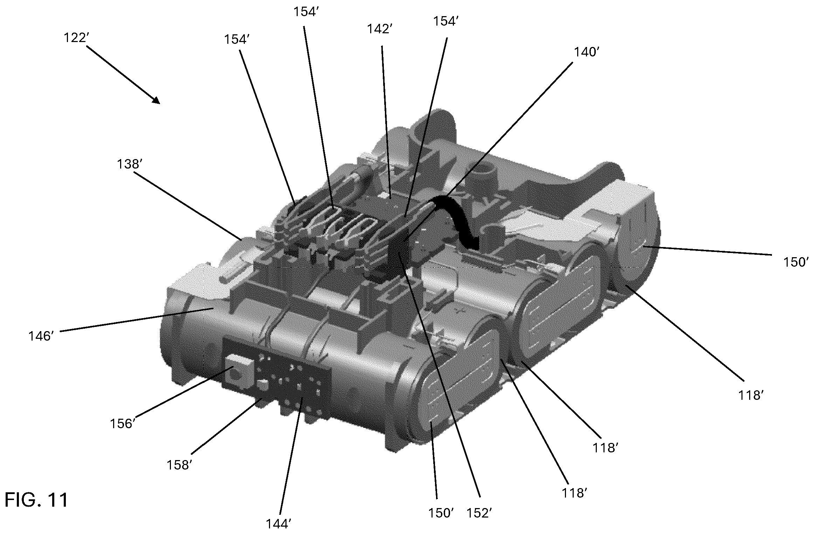

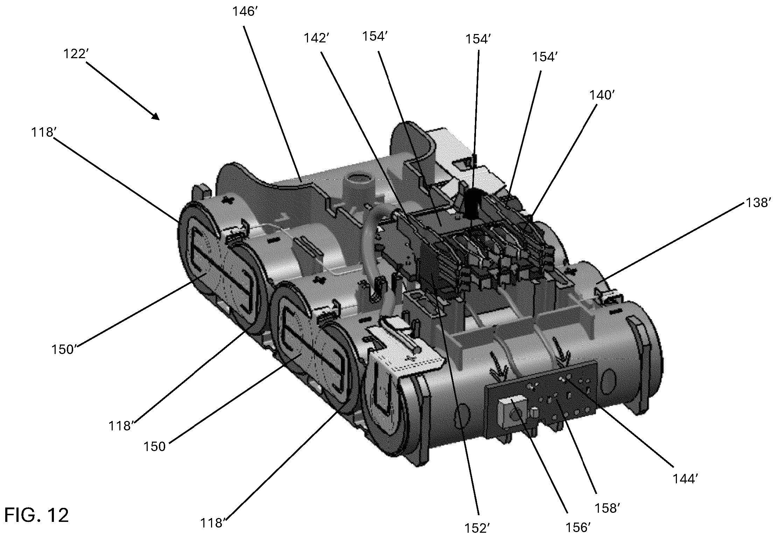

Referring to FIG. 1, the present patent application provides an example first battery pack 100 (FIGs. 2 - 7) and example second battery pack 100' (FIGs. 8 - 13) that may be generally configured to provide electrical power to an example power tool 102 and to receive electrical power from an example battery pack charger 104. The power tool 102 and the battery pack charger 104 may each be interchangeably referred to as an electrical device.

The battery packs 100, 100' may be rechargeable battery packs. The battery packs 100, 100' may be replaceable battery packs. The battery packs 100, 100' may be rechargeable using the battery pack charger 104 after being used as a power source for the power tool 102.

The power tool 102 may include a housing 106. The power tool housing 106 may house/incorporate components/elements such as an electric motor 108, a tool control circuit/tool control unit 110, a working element 112 and a battery pack interface that are configured to enable operation from one or more battery packs, for example, the first or second battery packs 100, 100' that have a rated voltage that corresponds to the rated voltage of the power tool 102. The motor 108 may be any brushed or brushless DC electric motor, including, but not limited to, a permanent magnet brushless DC motor (BLDC), a permanent magnet DC brushed motor (PMDC), an induction motor, a universal motor, etc. The tool control circuit 110 may include a power unit having one or more power switches disposed between the battery pack and the electric motor 108. The power switch(es) may be an electro-mechanical on/off switch, a power semiconductor device (e.g., diode, Field-Effect Transistor (FET), Bipolar Junction Transistor (BJT), Insulated-Gate Bipolar Transistor (IGBT), etc.), or a combination thereof. The tool control circuit 110 may further include a control unit, such as a microprocessor or a microcontroller or similar programmable module configured to, among other functions, control gates of power switches. The tool control circuit 110 may be arranged to control a switching operation of the power switches in the power unit. The tool control circuit 110 may control the motor 108 in either fixed speed or variable speeds. Additionally or alternatively, the tool control circuit 110 may be configured to monitor and manage the operation of the battery pack. Additionally or alternatively, the tool control circuit 110 may be configured to monitor and manage various power tool operations and conditions.

Referring to FIGs. 2 - 13, the battery packs 100, 100' may include a battery pack housing (or simply housing) 120, 120' and a corepack 122, 122' received in the battery pack housing 120, 120'. The battery pack housing 120, 120' may provide a protective cover for the corepack 122, 122' and provide an electrical device interface for mating with the power tool 102 and/or the charger 104.

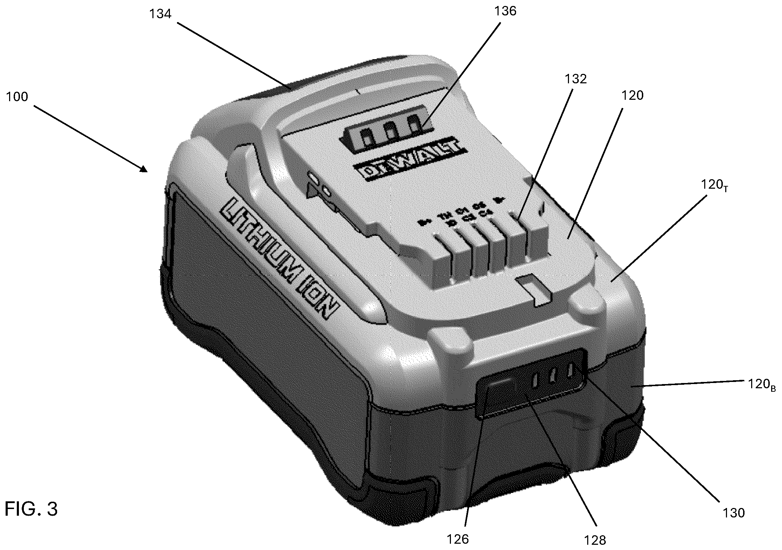

Referring to FIGs. 3, 4, 9, and 10, the battery packs 100, 100' may include a configuration for creating the housing 120, 120'. For example, the housing 120, 120' may include a top/upper housing portion $120_T$, $120'_T$ and a bottom/lower housing portion $120_B$, $120'_B$ which may be coupled/joined together at a horizontal parting line to form the housing 120, 120'. In another embodiment, the battery packs 100, 100' may include two (left and right) side portions which may be coupled/joined together at a vertical parting line to form the housing 120, 120'. The housing 120, 120' may be constructed of plastic or other suitable material for the application. Regardless of the structure, the housing 120, 120' forms an interior/internal/inner cavity 124, 124' that may be configured to receive the corepack 122, 122' therein. Other configurations for forming the housing 120, 120' are contemplated and encompassed by the present patent application.

The battery pack 100, 100' may also include a state of charge (SOC) display 126, 126' on a surface/side of the housing 120, 120'. The SOC display 126, 126' may include a flexible cover 128, 128'. The flexible cover 128, 128 may include a plurality of slits 130, 130'. The SOC display 128, 128' may include or may be operatively connected to an SOC subassembly, discussed in more detail below.

The pack housing 120, 120' may also include a plurality of terminal slots 132, 132' in a top portion 120$_T$, 120'$_T$ of the housing 120, 120'. The plurality of terminal slots 132, 132' may be positioned in other portions of the housing 120, 120'. The plurality of terminal slots 132, 132' may correspond to a plurality of electrical device terminals. The electrical device terminals may be received by the plurality of terminal slots 132, 132'.

The battery pack housing 120, 120' may be operably connectable to the power tool 102 or the battery pack charger 104. The battery packs 100, 100' may be "slide-type" battery packs that are attached/connected by sliding into or onto corresponding engagement portions of the power tool 102 or the battery pack charger 104. For example, the housing 120, 120' of the battery packs 100, 100' may include the electrical device interface for mechanically coupling with the corresponding battery pack interface of the electrical device (e.g., power tool 102 or the battery pack charger 104). The electrical device interface may include a rail and groove system including a pair of rails and a pair of grooves. The rail and groove system may be configured for a sliding connection of the battery pack 100, 100' with the power tool 102 or the battery pack charger 104. The battery pack interface of the power tool 102 or the battery pack charger 104 may include corresponding rails and grooves to mechanically connect the battery pack 100, 100' and the power tool 102/battery pack charger 104 together. Other types of interfaces are contemplated and encompassed by the present patent application. The structure of the battery pack connection to the power tool 102 or the battery pack charger 104 is not particularly limited and a wide variety of battery pack connection mechanisms known in the art also may be advantageously utilized with the present teachings.

The electrical device interface of the battery packs 100, 100' may also include a latch system for fixing/attaching the battery packs 100, 100' to the electrical device. The latching system of the battery packs 100, 100' may be configured for latching the battery packs 100, 100' to the electrical device upon mating the battery packs 100, 100' to the electrical device along a mating direction. The latch system may include a spring loaded latch. The latch system may include either one piece latch system or a multi-/two-piece latch system. The latch system and/or the rail and groove system (including the pair of rails and the pair of grooves) may form a connection mechanism that is configured for physically/mechanically coupling the battery packs 100, 100' to the electrical device (the power tool 102 or the battery pack charger 104). The latch system may also include a portion (e.g., user actuation member) 134, 134' for receiving a user's finger to depress a component of the latch system and a latch 136, 136' (e.g., engaging portion) that may be received by the power tool 102 or by the battery pack charger 104 to maintain the battery pack 100, 100' fixed to the power tool 102 or the battery pack charger 104.

The corepack 122, 122' may be received/disposed in the battery pack housing 120, 120'. For example, the corepack 122, 122' may be received in the internal cavity 124, 124' of the housing 120, 120' of the battery pack 100, 100'.

The corepack 122, 122' may include a cell holder subassembly 138, 138', a terminal block 140, 140', a main electronics module subassembly (or simply electronics subassembly) 142, 142', and a state of charge (SOC) subassembly 144, 144', all electrically coupled to each other.

The cell holder subassembly 138, 138' may include a cell holder housing (or simply a cell holder) 146, 146', a plurality of battery cells 148, 148', and a plurality of battery straps 150, 150'. The plurality of battery cells 148, 148' may include at least five battery cells. The number of battery cells may vary.

The plurality of battery cells 148, 148' may be received in the cell holder. The cell holder 146, 146' may keep the battery cells 148, 148' in a fixed relationship relative to each other.

The plurality of battery straps 150, 150' may electrically connect the battery cells 148, 148' to each other and/or to the electronics subassembly 142, 142'.

In one embodiment, a plurality of cylindrical battery cells 148, 148' may be received in the cell holder subassembly 138, 138'. In another embodiment, a plurality of tabless cylindrical battery cells 148, 148' may be received in the cell holder subassembly 138, 138'. The number of the battery cells 148, 148' received in the cell holder subassembly 138, 138' may vary. Referring to FIGS. 2-7, the battery pack 100 includes ten battery cells 148. Referring to FIGS. 8-13, the battery pack 100' includes five battery cells 148'.

The battery pack terminal block 140, 140' may include a terminal block housing 152, 152' and a plurality of battery pack terminals 154, 154' for transmitting current between the battery pack 100, 100' and the power tool 102/battery pack charger 104. The plurality of terminal slots 132, 132' corresponds to and are aligned with the plurality of battery pack terminals 154, 154'. The electrical device terminals may be received by the plurality of terminal slots 130, 130' and engage and mate with the battery pack terminals 154, 154'. The battery pack terminals 154, 154' may be configured to be electrically connectable to power tool terminals of the power tool 102 or to the charger terminals of the battery pack charger. The battery pack terminals 154, 154' may also be configured to be electrically connected to the battery cells 148, 148' of the battery pack 100, 100'. The battery pack terminals 154, 154' may include power terminals and signal/communication terminals as would be appreciated by a person of ordinary skill in the art. The battery pack 100, 100' may include a power supply positive terminal, a power supply negative terminal, and a power supply signal terminal. The power supply positive terminal and the power supply negative terminal may be configured for output of a discharge current to the power tool 102 or for input of a charge current from the battery pack charger 104. The power supply signal terminal(s) may be configured for communication with the power tool 102/the battery pack charger 104.

The electronics subassembly 142, 142' may include a main PCB, and electronics and electronic components and circuits disposed on the main PCB. The electronics subassembly 142, 142' may include a pack control circuit (sometimes referred to as a battery pack control unit or a battery management system). The printed circuit boards may be replaced by other types of circuits, including but not limited to flexible printed circuits. The electronics subassembly 142, 142' may include flexible circuits, wires, and/or other connectors.

The SOC subassembly 144, 144' may include an SOC PCB, an activation button 156, 156', and a plurality of LEDs/lights 158, 158' mounted on the SOC PCB. The plurality of LEDs 158, 158' may be visible to a user through the plurality of slits 130, 130' in the flexible cover 128, 128' of the SOC display 126, 126'. As would be appreciated by a person of ordinary skill in the art, the SOC PCB 144, 144' may be connected to the main electronics subassembly 142, 142' by a pair of wires.

The corepack 122, 122' may also include a temperature sensor 160, 160'. The temperature sensor 160, 160' may be configured to detect a temperature of the battery cell(s) 148, 148'. The temperature sensor 160, 160' may be connected to a power supply signal terminal. The temperature sensor 160, 160' may be disposed in close proximity to, e.g., on a surface of, a battery cell 148, 148' and may be configured to detect a temperature of the battery cell 148, 148', e.g., the surface of the battery cell. The temperature sensor 160, 160' may provide a signal representative of the temperature of one or more of the plurality of battery cells 148, 148'. The temperature signal from the temperature sensor 160, 160' may be provided to the pack control circuit, the tool control circuit 110 or a charger control circuit 105. If the temperature signal indicates an overtemperature threshold has been exceeded, the power tool 102 may stop receiving electric power outputted by the battery pack 100, 100' or the battery pack charger 104 may stop providing electric power to the battery pack 100, 100', thereby preventing the battery pack 100, 100' from damage due to overheating. The temperature sensor 160, 160' may be a thermistor such as a negative temperature coefficient (NTC) thermistor, a positive temperature coefficient (PTC) thermistor, or other similar devices.

In general, a battery pack may be defined in terms of its volume.

In a first example, a volume of the battery pack 100, 100' may be defined by a "box" for holding the battery pack 100, 100'. The box may represent a measure of expressing (or defining) an example volume of the battery pack 100, 100' (i.e., a "box volume"). As used herein, the box volume may mean the smallest rectangular box that will fit the battery pack 100, 100', as expressed in cubic units (e.g., liters (L)). Such a box may have length dimension (L), a width dimension (W), and a height dimension (H).

Referring to FIG. 2, the smallest box in which the battery pack 100 would fit may have the following dimensions. The box may have a length dimension L in a range of approximately 129 mm to approximately 133 mm. The box may have a length dimension of approximately 131 mm. The box may have a width dimension W in a range of approximately 83 mm to approximately 87 mm. The box may have a width dimension of approximately 85 mm. The box may have a height dimension H in a range of approximately 78 mm to approximately 82 mm. The box may have a height dimension of approximately 80 mm. The box may have a box volume in a range of approximately 0.835 L to approximately 0.942 L. The box may have a box volume of approximately 0.891 L.

Referring to FIG. 8, the smallest box in which the battery pack 100' would fit may have the following dimensions. The box may have a length dimension L in a range of approximately 129 mm to approximately 133 mm. The box may have a length dimension of approximately 131 mm. The box may have a width dimension W in a range of approximately 83 mm to approximately 87 mm. The box may have a width dimension of approximately 85 mm. The box may have a height dimension H in a range of approximately 56 mm to approximately 60 mm. The box may have a height dimension of approximately 58 mm. The box may have a box volume in a range of approximately 0.600 L to approximately 0.694 L. The box may have a box volume of approximately 0.646 L.

In a second example, a volume of the battery pack 100, 100' may be defined by the battery pack housing 120, 120' of the battery pack 100, 100'. The battery pack housing 120, 120' may represent another measure of expressing (or defining) an example volume of the battery pack 100, 100' (i.e., a "pack displacement volume"). As used herein, the pack displacement volume means the amount of three-dimensional (3D) space the entire battery pack 100, 100' takes up, including the battery pack interface that is a part of the battery pack 100, 100', as expressed in cubic units (e.g., liters (L)). The pack displacement volume may be measured using a displacement method, which measures a volume of water displaced when an entire, sealed battery pack 100, 100' is submerged in water.

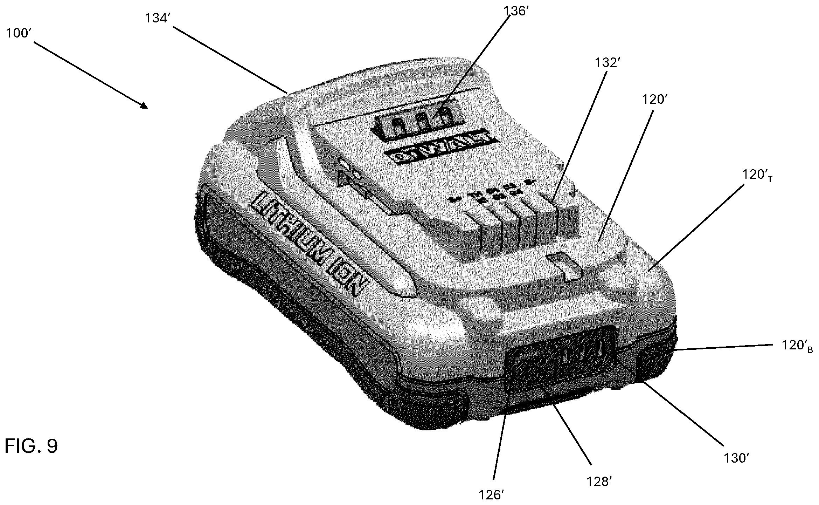

Referring to FIG. 3, the battery pack 100 may have a pack displacement volume in a range of approximately 0.582 L to approximately 0.702 L. The battery pack 100 may have a pack displacement volume of approximately 0.642 L. Referring to FIG. 9, the battery pack 100' may have a pack displacement volume in a range of approximately 0.343 L to approximately 0.443 L. The battery pack 100' may have a pack displacement volume of approximately 0.393 L.

In a third example, a volume of the battery pack 100, 100' may be defined by the cell holder subassembly 138, 138' of the battery pack 100, 100'. The cell holder subassembly 138, 138' may represent another measure of expressing (defining) an example volume of the battery pack 100, 100' (i.e., a "cell holder subassembly volume" or CHS volume). As used herein, the cell holder subassembly volume means the amount of 3D space taken up by the cell holder subassembly 138, 138', as expressed in cubic units (e.g., liters (L)). The cell holder subassembly volume may be measured using a displacement method, which measures a volume of water displaced when an entire, sealed cell holder subassembly 138, 138' is submerged in water.

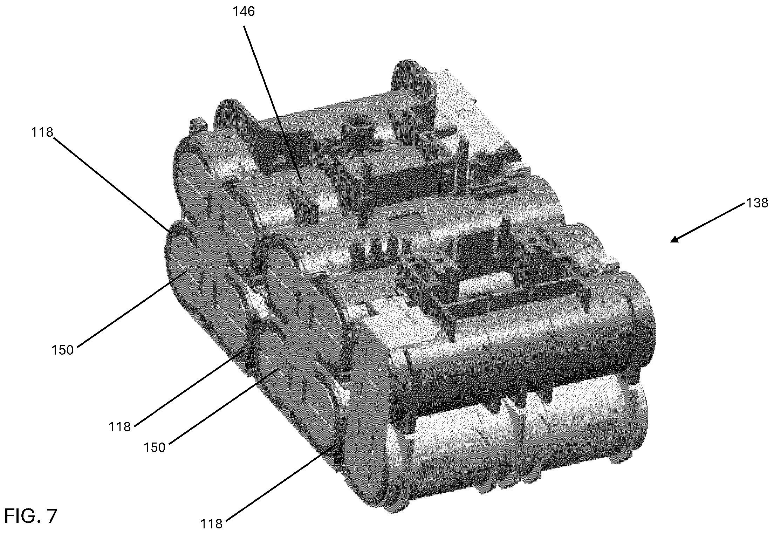

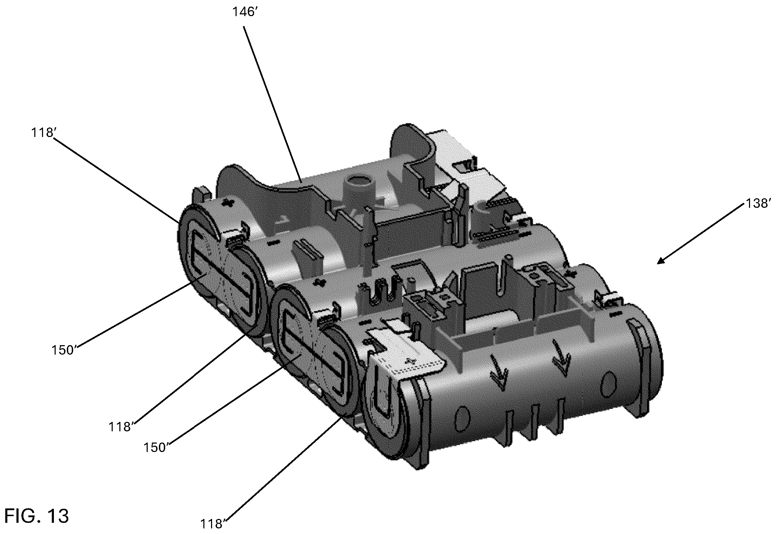

Referring to FIG. 7, the cell holder subassembly 138 may have a cell holder subassembly volume in a range of approximately 0.247 L to approximately 0.347 L. The cell holder subassembly 138 may have a cell holder subassembly volume of approximately 0.297 L. Referring to FIG. 13, the cell holder subassembly 138' may have a cell holder subassembly volume in a range of approximately 0.101 L to approximately 0.201 L. The cell holder subassembly 138' may have a cell holder subassembly volume of approximately 0.151 L.

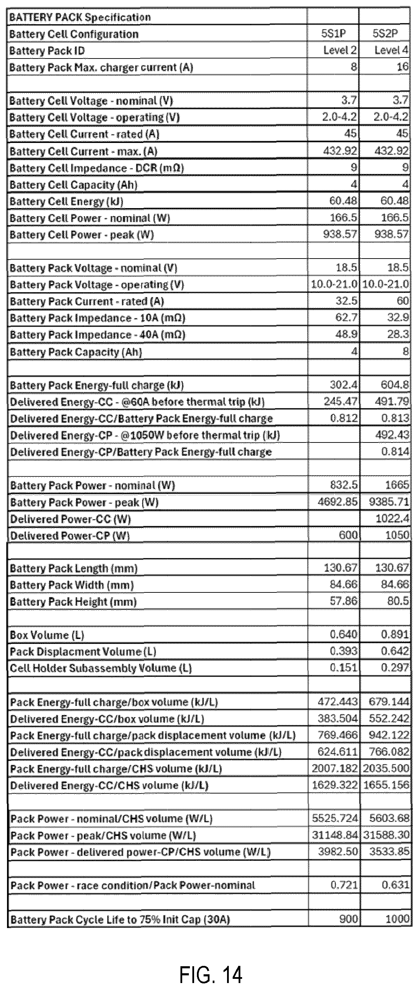

FIG. 14 shows various parameters of the battery packs 100, 100' and/or the battery cells 148, 148' along with their corresponding values.

The battery cell type may include cylindrical battery cells. The battery cell type may include tabless cylindrical battery cells.

In battery packs using conventional lithium-ion cylindrical batteries or battery cells, each individual battery cell (in the battery pack) may have a narrow connection band (interchangeably referred to as a "tab") to the anode and cathode on both sides. These tabs may create a bottleneck for the current delivered by the battery cell and contribute to the battery cell's electrical inner resistance, causing heat to be generated. To ensure that the battery cell/pack doesn't overheat, particularly during high-performance applications, the battery pack may shut down, leaving energy remaining in the battery cell/pack unused. In tabless battery cells, the electricity can flow through many paths across the entire length of the anode and cathode rather than being restricted to one or a few tabs. This tabless battery cell design may be configured to reduce the inner resistance of each individual battery cell and therefore reduce the inner resistance substantially for the battery pack as a whole. Significantly less heat is generated as a result, which is a limiting factor in demanding applications. This may also translate to longer runtimes compared to the conventional battery cells. The tabless battery cell design may be configured to make use of the existing round/cylindrical battery cell shape with many paths/tabs.

A battery pack may have a battery cell configuration. The battery cell configuration may be, for example, a 5S1P configuration or a 5S2P configuration. That is, the plurality of battery cells 148, 148' may have a 5S1P configuration or a 5S2P configuration. Each of the battery cell configurations designates the number of parallel connections in the battery pack 100, 100'.

Referring to FIGS. 8-13, the example battery pack 100' includes five battery cells 148' in the 5S1P configuration in which the five battery cells 148' are connected in series. That is, the plurality of battery cells 148' may include five battery cells 148' in the 5S1P configuration.

Referring to FIGS. 2-7, the example battery pack 100 includes ten battery cells 148 in the 5S2P configuration in which the ten battery cells 148 includes five sets of battery cells 148. Each set of battery cells 148 includes two battery cells 148 connected in parallel and the five sets of battery cells 148 are connected in series. That is, the plurality of battery cells 148 may include ten battery cells 148 in the 5S2P configuration.

The battery pack 100, 100' may also include a power supply identification module/circuit. The power supply identification circuit may be part of the pack control circuit or a separate module/circuit. The power supply identification module may be configured to store an identifier (ID) of the battery pack 100, 100' (interchangeably referred to as battery pack ID or battery pack identifier or battery pack identification) and may be configured to identify the (first) battery pack 100 or the (second) battery pack 100' when inserted into the battery pack charger 104 or the power tool 102. The ID of the battery pack 100, 100' may include, for example, a model, a version, a battery cell configuration, and a battery cell type. The ID of the battery pack 100, 100' may be one or more communication codes and may also be an ID resistor(s), ID resistor-capacitor circuit, a light-emitting diode (LED) display that may be configured to display identification data of the battery pack 100, 100', serial data sent when the battery pack 100, 100' is connected to and sensed by the power tool 102 or the battery pack charger 104, fields in a frame of data sent to the power tool 102/battery pack charger 104 through a power supply communication interface, or the like. The tool control circuit 110 of the power tool 102 may be configured to identify battery pack identification, which may be associated with a number of parallel connections in the battery pack 100, 100'. The charger control circuit 105 of the battery pack charger 104 may be configured to identify battery pack identification, which may be associated with a number of parallel connections in the battery pack 100, 100'.

The battery pack 100', as shown in FIGS. 8-13, may have a battery pack ID of level 2. The battery pack 100, as shown in FIGS. 2-7, may have a battery pack ID of level 4. The battery pack ID is used by the tool control circuit 110 of the power tool 102 or the charger control circuit 105 of the battery pack charger 104 to determine the type of the battery pack that is being connected to the power tool 102/the battery pack charger 104.

The battery pack 100', as shown in FIGS. 8-13, may be configured to be charged by the battery pack charger 104 at a maximum charge current/rate (measured in Amperes) of 8 A. This charge rate equates to 8A per string of cells. The battery pack 100, as shown in FIGS. 2-7, may be configured to be charged by the battery pack charger 104 at a maximum charge current/rate (measured in Amperes) of 16 A. This equates to 8A per string of cells. The provision of a battery pack being configured to accept a charging rate (current) of at least 8 A per string of cells enables the battery pack to be used with an appropriate charger to maximise the benefit of the charger. For instance, providing such a battery pack means that the battery pack will benefit from a reduced charging time when using a charger capable of charging at 8 A or higher, rather than at, e.g., only 4 A.

The various parameters of the battery cells 148, 148' along with their corresponding values (as shown in FIG. 14) are discussed in detail below.

The nominal voltage of a battery cell (also interchangeably referred to as nominal voltage$_{\text{battery cell}}$, or battery cell voltage - nominal, as shown in FIG. 14) generally refers to the voltage of the battery cell at fifty percent (50%) of its SOC. The battery cell nominal voltage may be expressed or measured in Volts (V). An example battery cell of the present patent application may have a nominal voltage of approximately 3.7 V per battery cell.

The operating voltage of a battery cell (also interchangeably referred to as battery cell operating voltage or battery cell voltage - operating, as shown in FIG. 14) generally refers to a voltage range a manufacturer of the battery cell suggests operating the battery cell for safety and reliability purposes (e.g., using an open circuit, i.e., unloaded). The battery cell operating voltage may be expressed or measured in Volts. An example battery cell of the present patent application may have an operating voltage of approximately 2.0 V per battery cell (minimum battery cell voltage or voltage$_{\text{battery cell, min.}}$) to approximately 4.2 V per battery cell (maximum battery cell voltage or voltage$_{\text{battery cell, max.}}$).

The rated current of a battery cell (also interchangeably referred to as rated current$_{\text{battery cell}}$, rated current of the battery cell or as battery cell current - rated, as shown in FIG. 14) is the maximum continuous current whereby the battery cell can achieve approximately full discharge, i.e., to an undervoltage threshold condition, without reaching the battery cell manufacturer's recommended overtemperature threshold (cut-off limit). The battery cell rated current may be expressed or measured in Amperes (A). An example battery cell of the present patent application may have a rated current of approximately 45 A with an approximately 10 V undervoltage threshold and an approximately 80 °C overtemperature threshold. An example battery cell of the present patent application may have a rated current of approximately 55 A with an approximately 10 V undervoltage threshold and an approximately 80 °C overtemperature threshold.

The maximum current of a battery cell (also interchangeably referred to as maximum current$_{\text{battery cell}}$ or battery cell current - maximum, as shown in FIG. 14) is the maximum instantaneous current measured upon applying an approximately 5 milliohms (mΩ) short across the battery cell. The battery cell maximum current may be expressed or measured in Amperes. An example battery cell of the present patent application may have a maximum current of approximately 433 A using an approximately 5 mΩ short.

The impedance for a battery cell may be determined by the following procedure (sometimes referred to as a DC resistance procedure or DCR procedure or simply DCR): with a fully charged (100% SOC) battery cell conditioned to a room temperature (e.g., of approximately 20 - 25°C), a first load of 0.1 A is applied to discharge the battery cell for 10 seconds followed by a 10 A load to discharge the battery cell for 1 second. This discharge loading sequence is cycled 3 times. During the 3rd cycle, at the conclusion of the 0.1 A load step, the battery cell voltage ($V_1$) and the battery cell current ($I_1$) are measured. Also, during the 3$^{\text{rd}}$ cycle, at the conclusion of the 10 A load step, the battery cell voltage ($V_2$) and the battery cell current ($I_2$) are measured. Equation 1 below is used to calculate the battery cell impedance.

$$\text{impedance (m}\Omega) = (V_2 - V_1)/(I_2 - I_1) \qquad \text{Equation (1)}$$

Using the above impedance procedure for a battery cell, an example battery cell of the present patent application may have a battery cell impedance range of approximately 8.5 mΩ to approximately 9.5 mΩ. Using the above impedance procedure for a battery cell, an example battery cell of the present patent application may have a battery cell impedance of approximately 9 mΩ.

The rated capacity of a battery cell (also interchangeably referred to as battery cell rated capacity, or battery cell capacity or rated capacity$_{\text{battery cell}}$ as shown in FIG. 14) may include the amount of charge stored in a battery cell or the capacity of a battery cell. The battery cell rated capacity may be measured in Ampere Hours or Amp Hours (Ah). A battery cell may have, for example, a battery cell capacity of 1 Ah which indicates that the battery cell will be able to continuously provide a current of 1 Amp for 1 hour. An example battery cell of the present patent application may have a battery cell capacity range of approximately 3.9 Ah to approximately 4.1 Ah. An example battery cell of the present patent application may have a battery cell capacity of approximately 4 Ah.

The energy of a battery cell (also referred to as stored energy or maximum stored energy) may be obtained by multiplying the maximum battery cell voltage with the battery cell rated capacity and with a conversion factor (e.g., 1 Watt-hour (Wh) is equal to 3.6 kiloJoules (kJ)) as shown below in Equation (2). The energy of a battery cell may be measured in kJ. An example battery cell of the present patent application may have a battery cell energy in a range of approximately 59 kJ to approximately 62 kJ. An example battery cell of the present patent application may have a battery cell energy of approximately of approximately 60.48 kJ.

$$\text{Energy}_{\text{battery cell}} \text{ @ full charge (kJ)} = \text{voltage}_{\text{battery cell, max.}} \text{ (V)} \times \text{rated capacity}_{\text{battery cell}} \text{ (Ah)}$$

$$\times \text{ kiloJoules/Watt-hour} \qquad \text{Equation (2)}$$

The nominal power of a battery cell (also interchangeably referred to as nominal power$_{\text{battery cell}}$ or battery cell power - nominal, as shown in FIG. 14) is equal to the rated current of the battery cell multiplied by the nominal voltage of the battery cell as shown below in Equation (3). The nominal power of a battery cell may be measured in Watts. An example battery cell of the present patent application may have battery cell nominal power of approximately 166.5 W.

$$\text{nominal power}_{\text{battery cell}} \text{ (W)} = \text{rated current}_{\text{battery cell}} \text{ (A)} \times$$

$$\text{nominal voltage}_{\text{battery cell}} \text{ (V)} \qquad \text{Equation (3)}$$

The peak power of a battery cell is equal to the maximum, momentary (or instantaneous) current of the battery cell at full charge (i.e., 100% SOC) and room temperature under a short circuit load of approximately 5 m$\Omega$ multiplied by the measured voltage of the battery cell at the time of measuring the maximum current of the battery cell as shown below in Equation (4). The peak power of a battery cell may be measured in Watts. An example battery cell of the present patent application may have battery cell peak power of approximately 938.57 W.

$$\text{peak power}_{\text{battery cell}} \text{ (W)} = \text{maximum current}_{\text{battery cell}} \text{ (A)} \times \text{voltage at}$$

$$\text{maximum current}_{\text{battery cell}} \text{ (V)} \qquad \text{Equation (4)}$$

The nominal voltage of a battery pack (also interchangeably referred to as battery pack voltage - nominal, as shown in FIG. 14) generally refers to the voltage of the battery pack at fifty percent (50%) of its SOC. The nominal voltage of the battery pack may be measured in Volts. The battery pack may have a nominal voltage of at least 18 V. Of course, for a battery pack, the nominal voltage will depend upon the number of battery cells electrically connected in series to each other. An example battery pack of the present patent application may have five battery cells connected in series with each battery cell having a nominal voltage of approximately 3.7 V. Such an example battery pack may have a nominal voltage of approximately 18.5 V (i.e., 3.7 V x 5).

The operating voltage of a battery pack generally refers to the DC voltage range at which the battery pack is designed by the battery pack manufacturer to operate (also sometimes referred to as controlled voltage). The operating voltage of the battery pack may be measured in Volts. An example battery pack of the present patent application may have five battery cells connected in series with each battery cell having an operating voltage of approximately 2.0 V to approximately 4.2 V. Such an example battery pack may have an operating range of approximately 10 V (i.e., voltage$_{\text{battery pack, min.}}$ = 2 V x 5) to approximately 21 V (voltage$_{\text{battery pack, max.}}$ = 4.2 V x 5). The voltage$_{\text{battery pack, min.}}$ may interchangeably be referred to as minimum battery pack voltage. The voltage$_{\text{battery pack, max.}}$ may interchangeably be referred to as maximum battery pack voltage.

The rated current of a battery pack (also interchangeably referred to as rated current$_{\text{battery pack}}$, battery pack current - rated, as shown in FIG. 14) is the maximum continuous current whereby the battery pack can achieve approximately full discharge, i.e., to an undervoltage threshold condition without reaching the battery pack manufacturer's recommended overtemperature threshold (cut-off limit). The battery pack rated current may be measured in Amperes. An example battery pack of the present patent application may have a rated current of at least approximately 32.5 A with an approximately 10 V undervoltage threshold and an approximately 70 °C overtemperature threshold. An example battery pack of the present patent application may have a rated current of at least approximately 60 A with an approximately 10 V undervoltage threshold and an approximately 70 °C overtemperature threshold.

The impedance for a battery pack may be determined by a 10A DCR impedance procedure, as follows: with a fully charged (i.e., 100% SOC) battery pack conditioned to room temperature (i.e., 20 - 25°C), a first load of 0.1 A is applied to discharge the battery pack for 10 seconds followed by a 10 A load to discharge the battery pack for 1 second. This discharge loading sequence is cycled 3 times. During the 3$^{rd}$ cycle, at the conclusion of the 0.1 A load step, the battery pack voltage (V$_1$) and the battery pack current (I$_1$) are measured. Also, during the 3$^{rd}$ cycle, at the conclusion of the 10 A load step, the battery pack voltage (V$_2$) and the battery pack current (I$_2$) are measured. Equation 1 above is used to calculate the battery pack impedance at 10 A. The battery pack impedance at 10 A may be interchangeably referred to as battery pack impedance - 10 A, as shown in FIG. 14.

Using the above 10A DCR impedance procedure, an example battery pack of the present patent application having a 5S2P configuration may have a battery pack impedance range of approximately 32.4 m$\Omega$ to approximately 33.4 m$\Omega$. Using the above 10 A DCR impedance procedure, an example 2P battery pack configuration of the present patent application may have a battery pack impedance of approximately 32.9 m$\Omega$. Using the above 10 A DCR impedance procedure, an example battery pack of the present patent application having a 5S1P configuration may have a battery pack impedance range of approximately 62.2 mΩ to approximately 63.2 mΩ. Using the above 10 A DCR impedance procedure, an example battery pack of the present patent application having a 5S1P configuration may have a battery pack impedance of approximately 62.7 mΩ.

The impedance for a battery pack may be determined by a 40 A DCR impedance procedure, as follows: with a fully charged (100% SOC) battery pack conditioned to room temperature, a first load of 0.1 A is applied to discharge the battery pack for 10 seconds followed by a 40 A load to discharge the battery pack for 1 second. This discharge loading sequence is cycled 3 times. During the 3rd cycle, at the conclusion of the 0.1 A step, the battery pack voltage ($V_1$) and the battery pack current ($I_1$) are measured. Also, during the 3rd cycle, at the conclusion of the 40 A step, the battery pack voltage ($V_2$) and the battery pack current ($I_2$) are measured. Equation 1 above is used to calculate the battery pack impedance at 40 A. The battery pack impedance at 40 A may be interchangeably referred to as battery pack impedance - 40 A as shown in FIG. 14.

Using the above 40 A DCR impedance procedure, an example battery pack of the present patent application having a 5S2P configuration may have a battery pack impedance range of approximately 27.8 mΩ to approximately 28.8 mΩ. Using the above 40 A DCR impedance procedure, an example battery pack of the present patent application having a 5S2P configuration may have a battery pack impedance of approximately 28.3 mΩ. Using the above 40 A DCR impedance procedure, an example battery pack of the present patent application having a 5S1P configuration may have a battery pack impedance range of approximately 48.4 mΩ to approximately 49.4 mΩ. Using the above 40 A DCR impedance procedure, an example battery pack of the present patent application having a 5S1P configuration may have a battery pack impedance of approximately 48.9 mΩ.

The rated capacity of a battery pack (also interchangeably referred to as battery pack rated capacity, or battery pack capacity or rated capacity$_{battery pack}$, as shown in FIG. 14) may include the amount of charge stored in a battery pack or the capacity of a battery pack. The battery pack rated capacity may be measured in Ampere Hours or Amp Hours (Ah). A battery pack may have, for example, a battery pack capacity of 1 Ah which indicates that the battery pack will be able to continuously provide a current of 1 Amp for 1 hour. An example 1P battery configuration pack of the present patent application may have a battery pack capacity range of approximately 3.9 Ah to approximately 4.1 Ah. An example battery pack of the present patent application may have a battery pack capacity of approximately 4 Ah. An example 2P battery pack configuration of the present patent application may have a battery pack capacity range of approximately 7.8 Ah to approximately 8.2 Ah. An example battery pack of the present patent application may have a battery pack capacity of approximately 8 Ah.

The maximum stored energy of a battery pack at its full SOC (also interchangeably referred to as maximum stored energy or battery pack energy at full charge, as shown in FIG. 14) is the maximum amount of energy the battery pack can store at its full SOC. The full SOC, full charge, and 100% SOC are all interchangeably used in the present patent application.

The maximum stored energy of the battery pack at its full SOC may be obtained by multiplying maximum battery pack voltage (or voltage$_{battery pack, max.}$) with the battery pack rated capacity (or rated capacity$_{battery pack}$) and with a conversion factor (e.g., 1 Wh is equal to 3.6 kJ), as shown below in Equation (5). The maximum stored energy of the battery pack at its full SOC may be measured in kJ. The example 2P battery pack of the present patent application may have maximum stored energy in a range of approximately 590 kJ to approximately 620 kJ. The example 2P battery pack of the present application may have a maximum stored energy of approximately 605 kJ. The example 1P battery pack of the present application may have a maximum stored energy in a range of approximately 295 kJ to approximately 310 kJ. The example 1P battery pack of the present application may have a maximum stored energy of approximately 302 kJ.

$$\text{Energy}_{battery\ pack} @ \text{ full charge} = \text{voltage}_{battery\ pack,\ max.} (V) \times \text{rated capacity}_{battery\ pack}$$
$$(Ah) \times kiloJoules/Watt\text{-}hour \qquad \text{Equation (5)}$$

The nominal power of a battery pack may be equal to the nominal power of a battery cell multiplied by the number of battery cells in a series-coupled string of battery cells multiplied by the number of strings connected in parallel as shown below in Equation (6). The nominal power may be measured in Watts. The nominal power of an example battery cell may be approximately 166.5 W. The nominal power of an example battery pack of the present application having a 2P configuration may be approximately 1665 W. The nominal power of an example battery pack of the present application having a 1P configuration may have be approximately 832.5 W.

$$\text{nominal power}_{battery\ pack} (W) = \text{nominal power}_{battery\ cell} (W) \times (\text{number of cells/string})$$
$$\times (\text{number of strings in parallel}) \qquad \text{Equation (6)}$$

The peak power of a battery pack is equal to the peak power of a battery cell multiplied by the number of battery cells in a series-coupled string of battery cells multiplied by the number of strings connected in parallel as shown below in Equation (7). The peak power may be measured in Watts. The peak power of an example battery cell of the present application may be approximately 938.5 W. The peak power of an example battery pack of the present application having a 2P configuration may be approximately 9385.71 W. The peak power of an example battery pack of the present application having a 1P configuration may be approximately 4692.85 W.

$$\text{peak power}_{\text{battery pack}} \text{ (W)} = \text{peak power}_{\text{battery cell}} \text{ (W)} \times \text{(number of cells/string)}$$
$$\times \text{(number of strings in parallel)} \qquad \text{Equation (7)}$$

One way of characterizing a battery pack is by the maximum amount of power (Watts) a fully charged (100% SOC) battery pack can deliver before reaching an overtemperature threshold (commonly referred to as thermal trip). This characterization may be referred to as delivered power of the battery pack or battery pack maximum (max) power out or delivered battery pack power or simply delivered power. Another way of characterizing a battery pack is by the maximum amount of energy (Joules) a fully charged (100% SOC) battery pack can deliver before reaching an overtemperature threshold (commonly referred to as thermal trip). This characterization may be referred to as delivered energy of the battery pack or battery pack maximum (max) energy out or delivered battery pack energy or simply delivered energy.

One method of determining delivered power and delivered energy is using a procedure to determine a race condition-constant current (which may also be interchangeably referred to as maximum continuous current or current$_{CC}$). This procedure provides an example delivered power and an example delivered energy before the thermal trip in a constant current setting.

The current$_{CC}$ is the highest current set on an electronic load for which the battery pack will fully discharge, i.e., reach an undervoltage threshold, prior to reaching an overtemperature threshold. The current$_{CC}$ may also be considered a constant/nominal current. The race condition-constant current procedure to determine current$_{CC}$ may start by connecting a fully charged (100% SOC) battery pack to the electronic load. The electronic load is set to a specific current value. The battery pack is discharged until (1) the battery pack reaches the undervoltage threshold, e.g., 2V per cell which is 10V for a 5S (e.g., 5S1P configuration or 5S2P configuration) battery pack, as measured across the positive and negative (B+/B-) terminals of the battery pack or (2) the pack battery reaches the overtemperature threshold, e.g., 70°C, measured via a thermocouple (or other temperature sensor) that is attached to one of the battery cells of the battery pack, e.g., the battery cell that typically runs the hottest. The process iterates with various loads (e.g., current settings) until six (6) discharges at a given current [electronic load set point] fully discharge. These six (6) discharges may be, for example, either six (6) individual packs or three (3) packs that are each tested twice. The current$_{CC}$ may be measured in Amperes. An example battery pack of the present patent application having a 5S2P configuration may have a race condition-current range of approximately 50 A to approximately 70 A. An example battery pack of the present patent application having a 5S2P configuration pack may have a race condition-current of approximately 60 A.

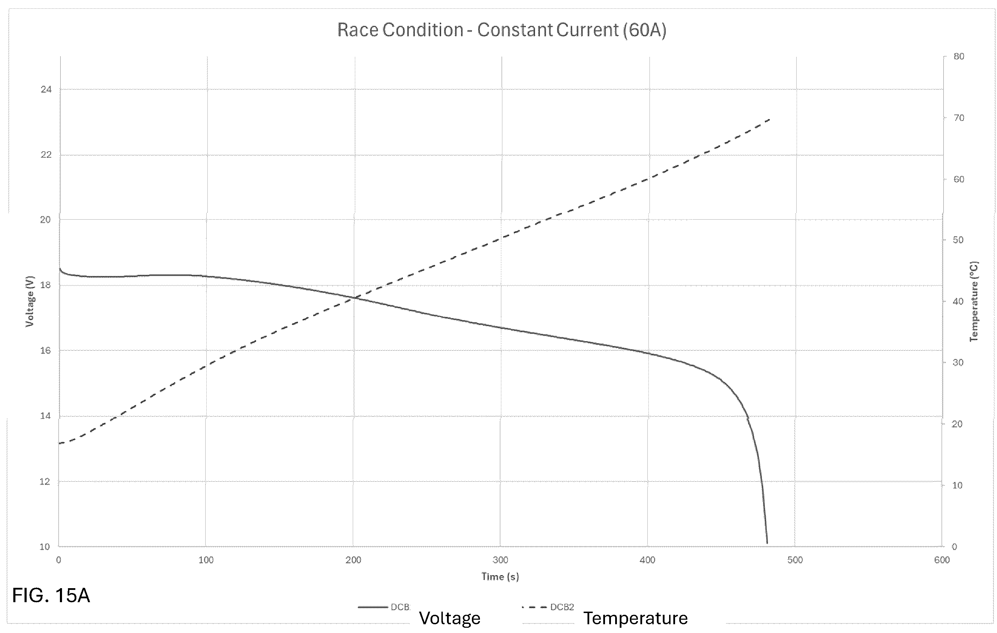

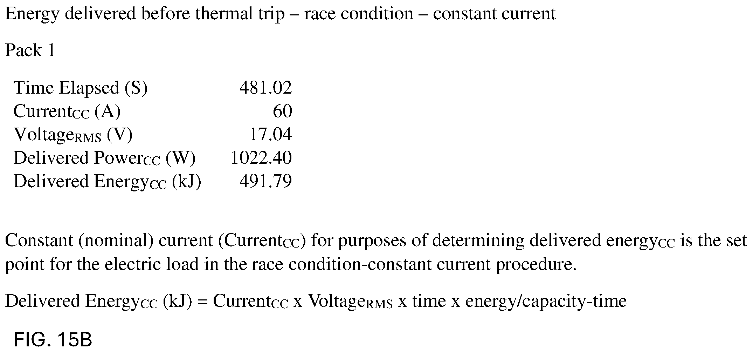

As illustrated in the graph of FIG. 15A and the table of FIG. 15B, the race condition-constant current procedure may be applied to an example battery pack of the present patent application having a 2P configuration. The left hand side Y-axis shows voltage $_{RMS}$ measured in Volts, the right hand side Y-axis shows the temperature measured in degrees Celsius, and the X-axis shows time measured in seconds. The dashed line shows the trend/pattern of the temperature vs time and the solid line shows the trend/pattern of the voltage vs time.

This graph of FIG. 15A and table of FIG. 15B illustrate an example application of the race condition-constant current procedure (discussed above) in which the constant (nominal) current (current$_{CC}$) of the example battery pack having a 2P configuration is approximately 60A. In other words, for this example battery pack, the highest set point at which the example battery pack would discharge to its undervoltage threshold without reaching the overtemperature threshold is approximately 60A.

With the current$_{CC}$ set to 60A, the results of this example are: an elapsed time of approximately 481 seconds to discharge to the undervoltage threshold and a voltage $_{RMS}$ of approximately 17 V. In this context, the current$_{CC}$ is the set point for the electric load in the race condition-constant current procedure. The delivered power$_{CC}$ may be determined by multiplying the voltage$_{RMS}$ with the current$_{CC}$, as shown below in Equation (8). The delivered power$_{CC}$ may be measured in W.

$$\text{Delivered Power}_{CC} \text{ (W)} = \text{voltage}_{RMS} \text{ (V)} \times \text{current}_{CC} \text{ (A)} \qquad \text{Equation (8)}$$

In an example battery pack, the delivered power$_{CC}$ may be approximately 1020 W.

The delivered energy of the battery pack may be obtained by multiplying the delivered power$_{CC}$ with time elapsed with a time conversion factor (e.g., 1 hour is equal to 3600 seconds) and with a second conversion factor (e.g., 1 Wh is equal to 3.6 kJ), as shown below in Equation (9). The delivered battery pack energy may be measured in kJ.

Delivered Energy$_{CC}$ = delivered power$_{CC}$ (W) x time (hr) x energy/capacity-time (kJ/Wh)          Equation (9)

An example battery pack of the present patent application having a 2P configuration may have a delivered energy$_{CC}$ in a range of approximately 484 kJ to approximately 495 kJ. An example battery pack of the present patent application having a 2P configuration may have a delivered energy$_{CC}$ of approximately 492 kJ.

As noted above, in an example battery pack having a nominal voltage of at least 18 V, a ratio of the delivered energy$_{CC}$ to the battery pack maximum stored energy (100% SOC) may be at least 50%. In one embodiment, in an example battery pack having a nominal voltage of at least 18 V, a ratio of the delivered energy$_{CC}$ to the battery pack maximum stored energy may be in a range of approximately 50% to approximately 82%. In one embodiment, in an example battery pack having a nominal voltage of at least 18 V, a ratio of the delivered energy$_{CC}$ to the battery pack maximum stored energy may be approximately 82%. Providing a battery pack with a ratio of delivered energy to battery pack maximum stored energy of at least 50% enables the battery pack to be used for powering electrical components with a given energy (e.g. a selected amount of energy needed by the electrical components to carry out a task), thereby reducing or avoiding the risk of such electrical components running out of energy (thereby being unable to complete the task), thus helping to improve the reliability of a device comprising such electrical components that is powered by the battery pack.

In another example battery pack having a 1P configuration, the battery pack may have a delivered energy$_{CC}$ of approximately 245 kJ and a battery pack maximum stored energy (100% SOC) of approximately 302 kJ. As such, a ratio of the delivered energy$_{CC}$ to the battery pack maximum energy stored may be approximately 0.811 or 81.1%. In another example battery pack having a 2P configuration, the battery pack may have a delivered energy$_{CC}$ of approximately 492 kJ and a battery pack maximum stored energy (100% SOC) of approximately 605 kJ. As such, a ratio of the delivered energy$_{CC}$ to the battery pack maximum energy stored may be approximately 0.813 or 81.3%.

Another method of determining delivered power and delivered energy is using a procedure to determine race condition-constant power (which may also be interchangeably referred to as maximum continuous power out or constant power out or nominal power out or power$_{CP}$). This race condition-constant power procedure provides an example delivered power and an example delivered energy before thermal trip in a constant power setting.

The power$_{CP}$ is the highest power set on an electronic load for which a battery pack will fully discharge, i.e., reach an undervoltage threshold, prior to reaching an overtemperature threshold. The power$_{CP}$ may also be considered a constant/nominal power. The race condition-constant power procedure, to determine the power$_{CP}$, may start by connecting a fully charged (100% SOC) battery pack to the electronic load. The electronic load is set to a specific power value. The battery pack is discharged until (1) the battery pack reaches the undervoltage threshold, e.g., 2V per battery cell which is 10V for a 5S battery pack (e.g., either the 5S1P configuration or the 5S2P configuration), as measured across the positive and negative (B+/B-) terminals of the battery pack or (2) the battery pack reaches the overtemperature threshold, e.g., 70°C, measured via a thermocouple (or other temperature sensor) that is attached to one of the battery cells of the battery pack, e.g., the battery cell that typically runs the hottest. The process iterates with various loads (e.g., power settings) until six (6) discharges at a given power [electronic load set point] fully discharge. These six (6) discharges may be, for example, either six (6) individual packs or three (3) packs that are each tested twice. The power$_{CP}$ may be measured in Watts.

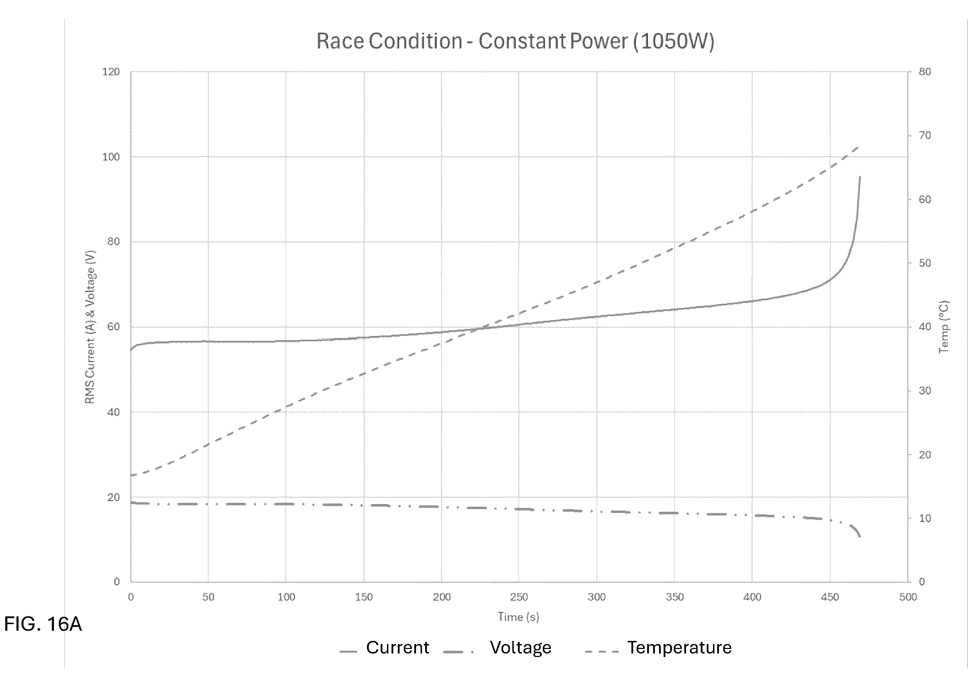

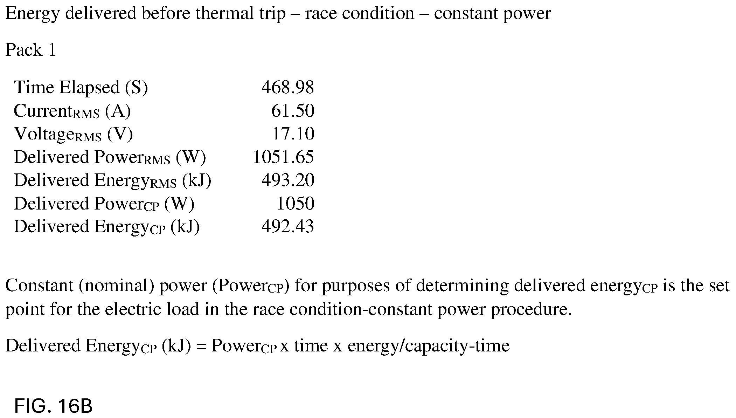

As illustrated in the graph of FIG. 16A and the table of FIG. 16B, the race condition-constant power procedure may be applied to an example battery pack of the present patent application having a 2P configuration. The left hand side Y-axis shows voltage$_{RMS}$ measured in Volts and current$_{RMS}$ measured in Amperes, the right hand side Y-axis shows the temperature measured in degrees Celsius, and the X-axis shows time measured in seconds. The dashed line shows the trend/pattern of the temperature vs time, the dashed-dotted line shows the trend/pattern of the voltage vs time, and the solid line shows the trend/pattern of the current vs time.

This graph of FIG. 16A and table of FIG. 16B illustrate an example application of the race condition-constant power procedure (discussed above) in which the constant (nominal) power (power$_{CP}$) of the example battery pack having a 2P configuration is approximately 1050 W. In other words, for this example battery pack, the highest set point at which the example battery pack would discharge to its undervoltage threshold without reaching the overtemperature threshold is approximately 1050 W.

With the power$_{CP}$ set to 1050 W, the results of this example are: an elapsed time of approximately 469 seconds to discharge to the undervoltage threshold, a voltage$_{RMS}$ of approximately 17 V, and a current $_{RMS}$ of approximately 62 A.

In an example battery pack, a power$_{CP}$ may be in a range of approximately 250 W to approximately 1060 W. In another example battery pack, the power$_{CP}$ may be approximately 1060 W. In another battery pack, the power$_{CP}$ may be in a range of approximately 600 W to approximately 1050 W. In another example battery pack, the power$_{CP}$ may be approximately 1050 W. An example battery pack having a 2P configuration may have a power$_{CP}$ in a range of approximately 400 W to approximately 1060 W. Another example battery pack having a 2P configuration may have a power$_{CP}$ of approximately 1060 W. Another example battery pack having a 1P configuration may have a power$_{CP}$ range of approximately 400 W to approximately 650 W. Another example battery pack having a 1P configuration may have a power$_{CP}$ of approximately 600 W. Providing a battery pack with a power$_{CP}$ of at least 250 W, of 250 W to approximately 1060 W, or of approximately 1060 W, enables the battery pack to be used for powering electrical components of up to the relevant wattage with a reduced or avoided risk of reaching an overtemperature threshold, thus helping to ensure safe and/or reliable operation. In conjunction with tabless battery cells, where inner resistance of the cells (and of a battery pack comprising multiple such cells) is reduced compared to non-tabless battery cells, the power$_{CP}$ values discussed herein help provide a safer and/or more reliable battery pack with a reduced potential for resistive heating, thereby further reducing or avoiding the risk of reaching an overtemperature threshold.

The delivered energy$_{CP}$ is obtained by multiplying the constant power (power$_{CP}$), with time elapsed, with a time conversion factor (e.g., 1 hour is equal to 3600 seconds), and with a second conversion factor (e.g., 1 Wh is equal to 3.6 kJ) as shown below in equation (10).

$$\text{Delivered Energy}_{CP} = \text{power}_{CP} \times \text{time (hr)} \times \text{energy/capacity-time (kJ/Wh)} \qquad \text{Equation (10)}$$

An example battery pack of the present patent application having a 2P configuration may have delivered energy$_{CP}$ of approximately 492 kJ.

The example battery pack having a 2P configuration and a delivered energy$_{CP}$ of approximately 492 kJ may have a battery pack maximum stored energy (100% SOC) of approximately 605 kJ. As such, a ratio of the delivered energy$_{CP}$ to the battery pack maximum energy stored may be approximately 0.813 or 81.3%.

Another way of characterizing a battery pack is by nominal power density. As used herein, nominal power density is the rate of energy flow (power) per unit volume expressed in Watts (W) per cubic unit (e.g., liters (L)).

Nominal power density of a battery pack is equal to the nominal power of the battery pack divided by a volume of the battery pack as shown below in Equation (11). The nominal power may be measured in Watts. The volume may be measured in Liters. The nominal power density may be measured in W/L.

$$\text{Nominal power density}_{\text{battery pack}} = \text{nominal power}_{\text{battery pack}} \text{ (W)/volume (L)} \qquad \text{Equation (11)}$$

The nominal power density of an example battery pack of the present application having a 2P configuration, based on the cell holder subassembly volume, may be approximately 5604 W/L. The power density of an example battery pack of the present application having a 1P configuration, based on the cell holder subassembly volume, may be approximately 5526 W/L.

Another way of characterizing a battery pack is by peak power density. As used herein, peak power density is the rate of peak energy flow (power) per unit volume.

Peak power density of a battery pack is equal to the peak power of the battery pack divided by a volume of the battery pack as shown below in Equation (12). The peak power may be measured in Watts. The volume may be measured in Liters. The peak power density may be measured in W/L.

$$\text{Peak power density}_{\text{battery pack}} = \text{peak power}_{\text{battery pack}} \text{ (W)/volume (L)} \qquad \text{Equation (12)}$$

The peak power density of an example battery pack of the present application having a 2P configuration, based on the cell holder subassembly volume, may be approximately 31588 W/L. The power density of an example battery pack of the present application having a 1P configuration, based on the cell holder subassembly volume, may be approximately 31149 W/L.

Another way of characterizing a battery pack is by delivered power$_{CP}$ density. As used herein, delivered power$_{CP}$ density is the rate of delivered power$_{CP}$ flow (power) per unit volume.

Delivered power$_{CP}$ density of a battery pack is equal to the delivered power$_{CP}$ of the battery pack divided by a volume of the battery pack as shown below in Equation (13). The delivered power$_{CP}$ may be measured in Watts. The volume may be measured in Liters. The delivered power$_{CP}$ density may be measured in W/L.

$$\text{delivered power}_{CP} \text{ density} = \text{delivered power}_{CP} \text{ (W)/volume (L)} \qquad \text{Equation (13)}$$

The delivered power$_{CP}$ density of an example battery pack of the present application having a 2P configuration, based on the cell holder subassembly volume, may be approximately 3534 W/L. The power density of an example battery pack of the present application having a 1P configuration, based on the cell holder subassembly volume, may be approximately 3982 W/L.

Another way of characterizing a battery pack is by delivered energy$_{CC}$ density. As used herein, delivered energy$_{CC}$ density is the rate of delivered energy$_{CC}$ (kJ) flow per unit volume.

Delivered energy$_{CC}$ density of a battery pack is equal to the delivered energy$_{CC}$ of the battery pack divided by a volume of the battery pack as shown below in Equation (14). The delivered energy of the battery pack may be measured in kJ. The volume of the battery pack may be measured in Liters. The delivered energy density of the battery pack may be measured in kJ/L.

$$\text{delivered energy}_{CC} \text{ density} = \text{delivered energy}_{CC} \text{ (kJ)/volume (L)} \qquad \text{Equation (14)}$$

The delivered energy$_{CC}$ density of an example battery pack of the present application having a 2P configuration, based on the cell holder subassembly volume, may be approximately 1655 kJ/L. The delivered energy density of an example battery pack of the present application having a 1P configuration, based on the cell holder subassembly volume, may be approximately 1630 kJ/L.

In general, the "cycle life" of a battery pack is a number of cycles (charges and discharges) the battery pack goes through before the capacity of the battery pack reaches 80% of its original capacity.

A cycle life protocol for determining the cycle life of an example battery pack is described in detail below. The cycle life protocol may be run in a chamber set to a temperature in a range of approximately 20°C to approximately 26°C. The cycle life protocol may include the following cycles: (1) a standard 10A discharge cycle (defined below), (2) an impedance cycle (as defined below), and (3) a standard 30A discharge cycle (defined below). The protocol may include the following sequence of cycles: (a) conducting one standard 10 A discharge cycle, (b) conducting one impedance cycle, (c) conducting one standard 10 A discharge cycle, and (d) conducting forty-seven standard 30 A discharge cycles.

There are a total 50 cycles in the cycle life protocol. These 50 cycles may include the first standard 10 A discharge cycle (i.e., the first cycle in the cycle life protocol sequence), the impedance cycle (i.e., the second cycle in the cycle life protocol sequence), the second standard 10 A discharge cycle (i.e., the third cycle in the cycle life protocol sequence), and followed by forty-seven standard 30 A discharge cycles (i.e., the fourth to fiftieth cycle in the cycle life protocol sequence). The cycle life protocol may also include (e) repeating the protocol sequence (i.e., procedures (a) - (d)) until the battery pack does not maintain 75% of its initial capacity.

The specifics/details of each cycle of the cycle life protocol are provided below.

The standard 10 A discharge cycle may include the following steps. The battery pack may be charged using an 8 A battery pack charger (e.g., a DeWalt DCB118 charger). The battery pack may be allowed to charge for a maximum charge time of 2.5 hours. The charging current may be stepped from 8 A to 6 A to 4 A to 2 A, wherein there is a 5 second time period of no current in between the current steps. The charge may be terminated at each current step if the battery pack voltage reaches a voltage charge threshold of 4.2 V per battery cell or if the battery pack (or a battery cell of the battery pack) temperature reaches a temperature charge threshold of 60°C. After charge termination at each current step, the battery pack may rest until the battery pack temperature is less than or equal to a temperature of 28°C. Once the 2A charge step has been completed (i.e., the battery pack voltage has reached the voltage charge threshold), the battery pack is considered to be at 100% state of charge (SOC). The battery pack may then be discharged at 10A until the battery pack voltage reaches a per battery cell voltage discharge threshold (limit) of 2.5 V per battery cell OR until the battery pack temperature reaches a temperature discharge threshold of 70°C. If the battery pack temperature reaches the temperature discharge threshold of 70 °C before the battery pack voltage reaches the voltage discharge threshold of 2.5V per battery cell, the discharging may be paused until the battery pack temperature decreases to 50°C, at which point discharge of the battery pack resumes until the battery pack voltage reaches the voltage discharge threshold. Once the battery pack reaches the voltage discharge threshold, discharging may be terminated and the battery pack may rest until the battery pack temperature is less than or equal to 28°C.

The impedance cycle may include the following steps. The battery pack may be charged using an 8 A battery pack charger (e.g., a DeWalt DCB118 charger). The battery pack may be allowed to charge for a maximum charge time of 2.5 hours. The charging current may be stepped from 8 A to 6 A to 4 A to 2 A, wherein there is a 5 second time period of no current in between the current steps. The charge may be terminated at each current step if the battery pack voltage reaches a voltage charge threshold of 4.2 V per battery cell or if the battery pack (or a battery cell of the battery pack) temperature reaches a temperature charge threshold of 60°C. After charge termination at each current step, the battery pack may rest until the battery pack temperature is at least or equal to 28°C. Once the 2A charge step has been completed (i.e., the battery pack voltage has reached the voltage charge threshold), the battery pack is considered to be at 100% SOC. The impedance measurements may then be taken after each of the following discharge steps: discharge at 0.1 A for 10 seconds; discharge at 10 A for 1 second; discharge at 0.1 A for 10 seconds, discharge at 10 A for 1 second; discharge at 0.1 A for 10 seconds; and discharge at 10 A for 1 second. Thereafter, the battery pack may be discharged at 10 A until the battery pack reaches a 50% SOC. Once the 50% SOC is achieved, discharge is terminated. Thereafter, the battery pack may then rest for 1.5 hours. Thereafter, the impedance measurement may then be taken at 50% SOC.

The standard 30 A discharge cycle may include the following steps. The battery pack may be charged using an 8 A battery pack charger (e.g., a DeWalt DCB118 charger). The battery pack may be allowed to charge for a maximum charge time of 2.5 hours. The charging current may be stepped from 8 A to 6 A to 4 A to 2 A, wherein there is a 5 second time period of no current in between the current steps. The charge may be terminated at each current step if the battery pack voltage reaches a voltage charge threshold of 4.2 V per battery cell or if the battery pack (or a battery cell of the battery pack) temperature reaches a temperature charge threshold of 60 °C. After charge termination at each current step, the battery pack may rest until the battery pack temperature is less than or equal to a temperature of 28 °C. Once the 2A charge step has been completed (i.e., the battery pack voltage has reached the voltage charge threshold), the battery pack is considered to be at 100% state of charge (SOC). The battery pack may then be discharged at 30A until the battery pack voltage reaches a per battery cell voltage discharge threshold (limit) of 2.5 V per battery cell OR until the battery pack temperature reaches a temperature discharge threshold of 70°C. If the battery pack temperature reaches the temperature discharge threshold of 70°C before the battery pack voltage reaches the voltage discharge threshold of 2.5V per battery cell, the discharging may be paused until the battery pack temperature decreases to 50 °C, at which point discharge of the battery pack resumes until the battery pack voltage reaches the voltage discharge threshold. Once the battery pack reaches the voltage discharge threshold, discharging may be terminated and the battery pack may rest until the battery pack temperature is less than or equal to 28°C.

An initial capacity of the example battery pack may be determined and measured at the end of the first standard 30A discharge cycle of the protocol. In other words, at the end of the first standard 30A discharge cycle, the capacity of the battery pack may be measured and this is set as the initial capacity. The initial capacity does not change throughout the protocol. The initial capacity of the battery pack may be measured in Amp*hours (Ah). The first standard 30A discharge cycle may be the fourth cycle in the cycle life protocol sequence with the first standard 10 A discharge cycle being the first cycle in the cycle life protocol sequence, the impedance cycle being the second cycle in the cycle life protocol sequence, the second standard 10 A discharge cycle being the third cycle in the cycle life protocol sequence. The end of discharge may be set by the end-condition of the standard 30 A discharge cycle.

A discharge capacity of the example battery pack may be determined and measured after each subsequent standard 30A discharge cycle. In other words, at the end the second standard 30A discharge cycle and every standard 30A discharge cycle thereafter, the capacity of the battery pack may be measured and this is set as the discharge capacity. The discharge capacity changes after every standard 30A discharge cycle. The discharge capacity of the battery pack may also be measured in Ah. After each discharge capacity measurement, the discharge capacity is compared to the initial capacity. When the discharge capacity reaches 75% of the initial capacity (i.e., discharge capacity /initial capacity = 75%), the cycle life protocol will terminate, and the total number of cycles completed to reach that point may be considered the battery pack's cycle life. In other words, the cycle life protocol sequence loops the 50 cycles, in the set order, over and over again. If, for example, a battery pack is able to go through the cycle life protocol sequence 20 times without the discharge capacity of the battery pack dropping below 75% of initial capacity of the battery pack, the battery pack is considered to have a cycle life of 1000 cycles.

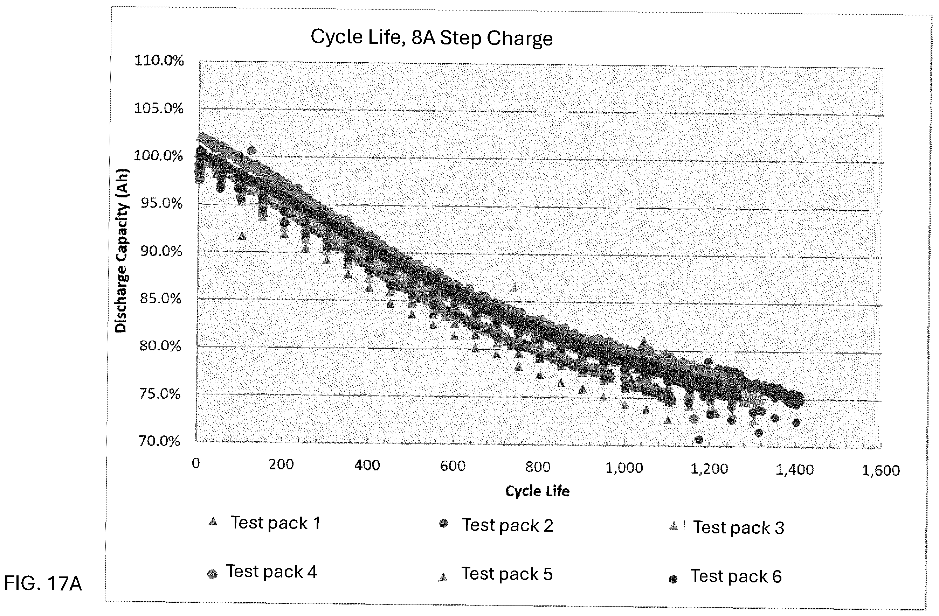

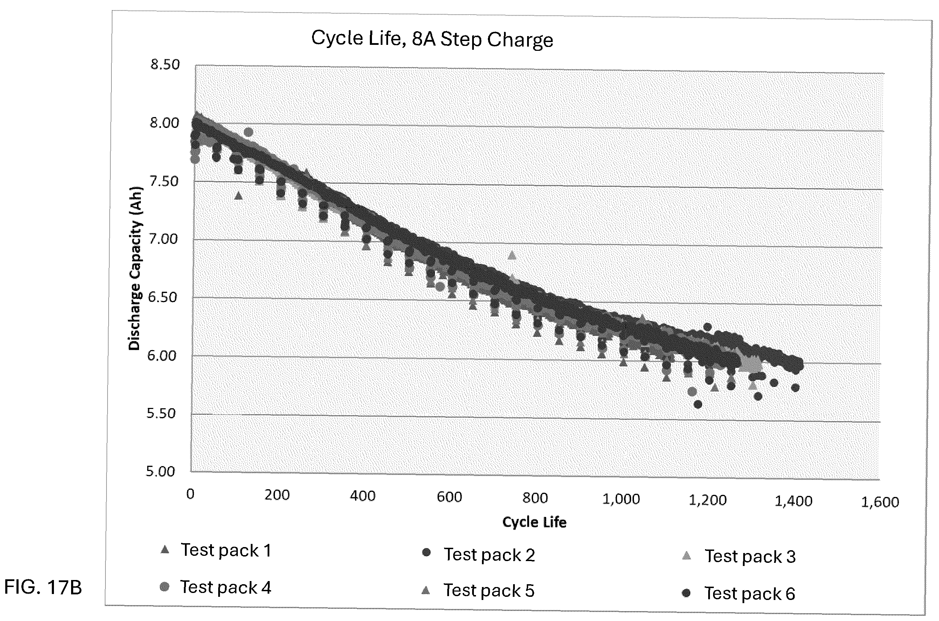

In one embodiment, as shown in FIGS. 14 and 17A, 17B, the battery pack cycle life to 75% initial capacity at 30 A may be 900 cycles for the 5S1P battery pack configuration and the battery pack cycle life to 75% initial capacity at 30 A may be 1000 cycles for the 5S2P battery pack configuration.

FIGS. 17A, 17B show graphs for cycle life (with 8 A step charge). In FIGS. 17A, 17B, the X-axis shows the cycle life (in cycles). In FIG. 17A, the Y-axis shows the discharge capacity measured in a percentage of original capacity. In FIG. 17B, the Y-axis shows the discharge capacity measured in Ampere Hours.

The battery pack has a nominal voltage of at least 18 V and a battery pack cycle life of at least 500 cycles. In one embodiment, the battery pack cycle life may be in a range of approximately 500 cycles to approximately 1100 cycles. In one embodiment, the battery pack cycle life may be approximately 1100 cycles. Providing a battery pack with a battery pack cycle life of at least 500 cycles enables the selection and use of a suitable battery pack for achieving high reliability under high use rates, where cycle life can be important, for example in remote settings where access to new battery packs may not be possible.

An example battery pack may have a nominal voltage of at least 18 V and when fully charged, may have a delivered energy of at least approximately 240 kJ and a ratio of the delivered energy to the cell holder subassembly volume of at least 1000 kJ/L. In one embodiment, the ratio of the delivered energy to the cell holder subassembly volume may be in a range of approximately 1000 kJ/L to approximately 1675 kJ/L. In one embodiment, the ratio of the delivered energy to the cell holder subassembly volume may be approximately 1675 kJ/L. The provision of a battery pack with a ratio of delivered energy to cell holder subassembly volume of at least 1000 kJ/L enables the provision of a battery pack of a compact size whilst still being able to deliver a high enough amount of energy to power a device. Providing a battery pack with a suitable such ratio enables a determination of the battery pack size that is large enough to power a given device (i.e. to meet the requirements of that device), without unnecessarily increasing the size, and therefore the weight, of the battery pack. In one embodiment, the battery pack may further comprise a power$_{CP}$ of at least 550 W. In one embodiment, the power$_{CP}$ may be in a range of approximately 550 W to approximately 1060 W. In one embodiment, the power$_{CP}$ may be approximately 1060 W. In one embodiment, a delivered energy may be 245.47 kJ and a ratio of the delivered energy to the cell holder subassembly volume may be approximately 1629.32 kJ/L for a 1P battery pack configuration. In one embodiment, a delivered energy may be 491.79 kJ and a ratio of the delivered energy to the cell holder subassembly volume may be approximately 1655.16 kJ/L for a 2P battery pack configuration.

An example battery pack may have a nominal voltage of at least 18 V and a power$_{CP}$ of at least 550 W and a ratio of a power$_{CP}$ to the cell holder subassembly volume of at least 2500 W/L. In one embodiment, the ratio of power$_{CP}$ to the cell holder subassembly volume may be in a range of approximately 2500 W/L to approximately 4000 W/L. In one embodiment, the ratio of power$_{CP}$ to the cell holder subassembly volume may be approximately 4000 W/L. In one embodiment, a power$_{CP}$ may be 600 W and a ratio of a power$_{CP}$ to the cell holder subassembly volume may be approximately 3982.50 W/L for a 1P battery pack configuration. In one embodiment, a power$_{CP}$ may be 1050 W and a ratio of a power$_{CP}$ to the cell holder subassembly volume may be approximately 3533.85 W/L for a 2P battery pack configuration. Providing a battery pack with a power$_{CP}$ of at least 550 W enables the battery pack to be used for powering electrical components of up to the relevant wattage with a reduced or avoided risk of reaching an overtemperature threshold, thus helping to ensure safe and/or reliable operation. The provision of a battery pack with a ratio of power$_{CP}$ to cell holder subassembly volume of at least 2500 W/L enables the provision of a battery pack of a compact size whilst still being able to deliver a high enough power to power a device. Providing a battery pack with a suitable such ratio enables a determination of the battery pack size that is large enough to power a given device (i.e. to meet the requirements of that device), without unnecessarily increasing the size, and therefore the weight, of the battery pack.

The battery pack has a nominal voltage of at least 18 V and a ratio of delivered energy to pack capacity of at least 40 kJ/Ah. In one embodiment, the ratio of delivered energy to pack capacity may be in a range of approximately 40 kJ/Ah to approximately 62 kJ/Ah. Providing a battery pack with a ratio of delivered energy to pack capacity of at least 40 kJ/Ah enables the selection and use of a suitable battery pack for powering electrical components with a given energy need (e.g. a selected amount of energy needed by the electrical components to carry out a task), thereby reducing or avoiding the risk of such electrical components running out of energy (thereby being unable to complete the task), thus helping to improve the reliability of a device comprising such electrical components that is powered by the battery pack. Such a battery pack avoids the need for a much larger capacity battery pack to be used to ensure proper operation of the electrical components.

An example battery pack may have a nominal voltage of at least 18 V and a ratio of a power$_{CP}$ to a nominal (battery pack) power of at least 60%. In one embodiment, the ratio of the power$_{CP}$ to the nominal (battery pack) power may be in a range of approximately 60% to approximately 72%. In one embodiment, the ratio of the power$_{CP}$ to the nominal (battery pack) power may be approximately 72%. In one embodiment, a ratio of the power$_{CP}$ to the nominal battery pack power may be approximately 0.721 or 72.1% for a 1P battery pack configuration. In one embodiment, a ratio of the power$_{CP}$ to the nominal battery pack power may be 0.631 or 63.1% for a 2P battery pack configuration. Providing a battery pack with a ratio of power$_{CP}$ to a nominal (battery pack) power of at least 60% enables the selection and use of a suitable battery pack for providing usable power, without reaching an overtemperature condition, when powering electrical components with a given power demand (e.g. sufficient to power the electrical components to carry out a task), thereby reducing or avoiding the risk of such electrical components having insufficient power to properly operate (thereby being unable to complete the task), thus helping to improve the reliability of a device comprising such electrical components that is powered by the battery pack. Such a battery pack avoids the need for a higher powered battery pack to be used to ensure proper operation of the electrical components.

An example battery pack may have a nominal voltage of at least 18 V and a ratio of a power$_{CP}$ to a pack capacity of at least 100 W/Ah. In one embodiment, the ratio of the power$_{CP}$ to the pack capacity may be in a range of approximately 100 W/Ah to approximately 155 W/Ah. In one embodiment, the ratio of the power$_{CP}$ to the pack capacity may be approximately 155 W/Ah. Providing a battery pack with a ratio of power$_{CP}$ to pack capacity of at least 100 W/Ah enables the selection and use of a suitable battery pack for powering electrical components with a given energy need (e.g. a selected amount of energy needed by the electrical components to carry out a task), thereby reducing or avoiding the risk of such electrical components running out of energy (thereby being unable to complete the task), thus helping to improve the reliability of a device comprising such electrical components that is powered by the battery pack. Such a battery pack avoids the need for a much larger capacity battery pack to be used to ensure proper operation of the electrical components.

An example battery pack may have a nominal voltage of at least 18 V and a delivered energy of at least 175 kJ. In one embodiment, the delivered energy may be in a range of approximately 175 kJ to approximately 500 kJ. In one embodiment, the plurality of cylindrical battery cells may have a 5S2P configuration and the delivered energy may be at least 300 kJ. In one embodiment, the plurality of cylindrical battery cells may have a 5S2P configuration and the delivered energy may be in a range of approximately 300 kJ to approximately 500 kJ. In one embodiment, the plurality of cylindrical battery cells may have a 5S2P configuration and the delivered energy may be approximately 500 kJ. Providing a battery pack with a delivered energy of at least 175 kJ enables the selection and use of a suitable battery pack for powering electrical components with a given energy need (e.g. a selected amount of energy needed by the electrical components to carry out a task), thereby reducing or avoiding the risk of such electrical components running out of energy (thereby being unable to complete the task), thus helping to improve the reliability of a device comprising such electrical components that is powered by the battery pack. Such a battery pack avoids the need to provide a battery pack with a larger energy capacity to ensure proper operation of the electrical components.

An example battery pack may have a plurality of cylindrical battery cells. The plurality of cylindrical battery cells may have a 5S2P configuration. The battery pack may have a nominal voltage of at least 18 V and a power$_{CP}$ of at least 500 W. In one embodiment, the power$_{CP}$ may be in a range of approximately 500 W to approximately 1060 W. In one embodiment, the power$_{CP}$ may be approximately 1060 W. Providing a battery pack with a power$_{CP}$ of at least 500 W enables the selection and use of a suitable battery pack for powering electrical components with a given energy demand (e.g. a selected power needed by the electrical components to carry out a task), thereby reducing or avoiding the risk of such electrical components being underpowered (thereby being unable to complete the task), thus helping to improve the reliability of a device comprising such electrical components that is powered by the battery pack. Such a battery pack avoids the need to provide a battery pack with a larger power merely to ensure proper operation of the electrical components, thereby helping to optimise the use of battery packs.

An example battery pack may have a nominal voltage of at least 18 V and a charging rate (current) of at least 6 A per string of battery cells.

The present patent application and its various embodiments as described above uniquely address the observed, noted and researched findings and improve on the prior and current state of the art systems. The listed products, features and embodiments as described in the present patent application should not be considered as limiting in any way.

Although the present patent application has been described in detail for the purpose of illustration, it is to be understood that such detail is solely for that purpose and that the present patent application is not limited to the disclosed embodiments, but, on the contrary, is intended to cover modifications and equivalent arrangements that are within the spirit and scope of the appended claims. In addition, it is to be understood that the present patent application contemplates that, to the extent possible, one or more features of any embodiment can be combined with one or more features of any other embodiment.

The illustration of the embodiments of the present patent application should not be taken as restrictive in any way since a myriad of configurations and methods utilizing the present patent application can be realized from what has been disclosed or revealed in the present patent application. The systems, features and embodiments described in the present patent application should not be considered as limiting in any way. The illustrations are representative of possible construction and mechanical embodiments and methods to obtain the desired features. The location and/or the form of any minor design detail or the material specified in the present patent application can be changed and doing so will not be considered new material since the present patent application covers those executions in the broadest form.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by a person of ordinary skill in the art in the context of the various elements, components, regions, layers and/or sections being described. For example, when referring to a numerical value, the terms "generally," "substantially," "approximately," and "about" may mean $\pm 5\%$ to $\pm 10\%$ of a recited value or such other percentage or value as would be understood to a person of ordinary skill in the art. In this way, the present patent application contemplates various advantageous configurations of and describes their performance in a way that allows a person of ordinary skill to ascertain the scope of protection of the claimed subject matter. However, it is also understood that such measurements, by their nature, are not always exactly reproducible and that some variation is to be expected. Thus, the above is intended to provide a reasonable range about various measured quantities without rendering the present disclosure to be unclear or indefinite. Furthermore, measurements of manufactured devices may vary due to some variations in the physical device dimensions themselves. In this way, the terms "generally," "substantially," "approximately," and "about" may also apply to physical dimensions, when appropriate and as understood by a person of ordinary skill in the art.

The foregoing illustrated embodiments have been provided to illustrate the structural and functional principles of the present patent application and are not intended to be limiting. To the contrary, the present patent application is intended to encompass all modifications, alterations and substitutions within the spirit and scope of the appended claims.

**Claims**

1.    A battery pack, configured to provide electrical power to an electric motor, the battery pack comprising:

> a battery pack housing;
> a cell holder subassembly received in the battery pack housing; and
> a plurality of tableless cylindrical battery cells received in the cell holder subassembly;

the battery pack having a nominal voltage of at least 18 V and a power$_{CP}$ of at least 250 W; optionally wherein the power$_{CP}$ is in a range of approximately 250 W to approximately 1060 W; further optionally wherein the power$_{CP}$ is approximately 1060 W.

2.    A battery pack, configured to provide electrical power to an electric motor, the battery pack comprising:

> a battery pack housing;
> a cell holder subassembly received in the battery pack housing; and
> a plurality of cylindrical battery cells received in the cell holder subassembly, the cell holder subassembly having a cell holder subassembly volume;

the battery pack having a nominal voltage of at least 18 V and when fully charged, having a delivered energy of at least approximately 240 kJ and a ratio of the delivered energy to the cell holder subassembly volume of at least 1000 kJ/L.

3.    The battery pack of claim 2, wherein the ratio of the delivered energy to the cell holder subassembly volume is in a range of approximately 1000 kJ/L to approximately 1675 kJ/L; optionally wherein the ratio of the delivered energy to the cell holder subassembly volume is approximately 1675 kJ/L.

4.    The battery pack of claim 2 or claim 3, further comprising a power$_{CP}$ of at least 550 W; optionally wherein the power$_{CP}$ is in a range of approximately 550 W to approximately 1060 W; further optionally wherein the power$_{CP}$ is approximately 1060 W.

5.    A battery pack, configured to provide electrical power to an electric motor, the battery pack comprising:

> a battery pack housing;
> a cell holder subassembly received in the battery pack housing, the cell holder subassembly having a cell holder subassembly volume; and
> a plurality of cylindrical battery cells received in the cell holder subassembly;

the battery pack having a nominal voltage of at least 18 V and having a power$_{CP}$ of at least 550 W and a ratio of the power$_{CP}$ to the cell holder subassembly volume of at least 2500 W/L; optionally wherein the ratio of the power$_{CP}$ to the cell holder subassembly volume is in a range of approximately 2500 W/L to approximately 4000 W/L; further optionally wherein the ratio of the power$_{CP}$ to the cell holder subassembly volume is approximately 4000 W/L.

6.    A battery pack, configured to provide electrical power to an electric motor, the battery pack comprising:

> a battery pack housing;
> a cell holder subassembly received in the battery pack housing; and

a plurality of cylindrical battery cells received in the cell holder subassembly;

the battery pack having a nominal voltage of at least 18 V and a ratio of a delivered energy to a battery pack maximum stored energy (100% SOC) of at least 50%; optionally wherein the ratio of the delivered energy to the battery pack maximum stored energy is in a range of approximately 50% to approximately 82%; further optionally wherein the ratio of the delivered energy to the battery pack maximum stored energy is approximately 82%.

7. A battery pack, configured to provide electrical power to an electric motor, the battery pack comprising:

a battery pack housing;
a cell holder subassembly received in the battery pack housing; and
a plurality of cylindrical battery cells received in the cell holder subassembly;

the battery pack having a nominal voltage of at least 18 V and a ratio of a delivered energy to a pack capacity of at least 40 kJ/Ah; optionally wherein the ratio of the delivered energy to the pack capacity is in a range of approximately 40 kJ/Ah to approximately 62 kJ/Ah; further optionally wherein the ratio of the delivered energy to the pack capacity is approximately 62 kJ/Ah.

8. A battery pack, configured to provide electrical power to an electric motor, the battery pack comprising:

a battery pack housing;
a cell holder subassembly received in the battery pack housing; and
a plurality of cylindrical battery cells received in the cell holder subassembly;

the battery pack having a nominal voltage of at least 18 V and a ratio of a $power_{CP}$ to a nominal power of at least 60%; optionally wherein the ratio of the $power_{CP}$ to the nominal power is in a range of approximately 60% to approximately 72%; further optionally wherein the ratio of the $power_{CP}$ to the nominal power is approximately 72%.

9. A battery pack, configured to provide electrical power to an electric motor, the battery pack comprising:

a battery pack housing;
a cell holder subassembly received in the battery pack housing; and
a plurality of cylindrical battery cells received in the cell holder subassembly;

the battery pack having a nominal voltage of at least 18 V and a ratio of a $power_{CP}$ to a pack capacity of at least 100 W/Ah; optionally wherein the ratio of the $power_{CP}$ to the pack capacity is in a range of approximately 100 W/Ah to approximately 155 W/Ah; further optionally wherein the ratio of the $power_{CP}$ to the pack capacity is approximately 155 W/Ah.

10. A battery pack, configured to provide electrical power to an electric motor, the battery pack comprising:

a battery pack housing;
a cell holder subassembly received in the battery pack housing; and
a plurality of cylindrical battery cells received in the cell holder subassembly;

the battery pack having a nominal voltage of at least 18 V and a delivered energy is at least 175 kJ; optionally wherein the delivered energy is in a range of approximately 175 kJ to approximately 500 kJ.

11. The battery pack of claim 10, wherein the plurality of cylindrical battery cells has a 5S2P configuration and the delivered energy:

is at least 300 kJ;
is in a range of approximately 300 kJ to approximately 500 kJ; or
is approximately 500 kJ.

12. A battery pack, configured to provide electrical power to an electric motor, the battery pack comprising:

a battery pack housing;

a cell holder subassembly received in the battery pack housing; and

a plurality of cylindrical battery cells received in the cell holder subassembly and having a 5S2P configuration;

the battery pack having a nominal voltage of at least 18 V and a power$_{CP}$ of at least 500 W; optionally wherein the power$_{CP}$ is in a range of approximately 500 W to approximately 1060 W; further optionally wherein the power$_{CP}$ is approximately 1060 W.

13. A battery pack, configured to provide electrical power to an electric motor, the battery pack comprising:

a battery pack housing;

a cell holder subassembly received in the battery pack housing; and

a plurality of cylindrical battery cells received in the cell holder subassembly;

the battery pack having a nominal voltage of at least 18 V and a charging rate (current) of at least 8 A per string of cells.

14. A battery pack, configured to provide electrical power to an electric motor, the battery pack comprising:

a battery pack housing;

a cell holder subassembly received in the battery pack housing; and

a plurality of cylindrical battery cells received in the cell holder subassembly;

the battery pack having a nominal voltage of at least 18 V and a battery pack cycle life of at least 500 cycles; optionally wherein the battery pack cycle life is in a range of approximately 500 cycles to approximately 1100 cycles; further optionally wherein the battery pack cycle life is approximately 1100 cycles.

15. **The** battery pack of any of claims 1, 4, 5, 8, 9 or 12, wherein power$_{CP}$ is defined as the highest power set on an electronic load for which a battery pack will fully discharge, prior to reaching an overtemperature threshold; optionally wherein power$_{CP}$ is determined by:

connecting a fully charged (100% SOC) battery pack to the electronic load set to a specific power value, and discharging the battery pack until:

(1) the battery pack reaches the undervoltage threshold, or
(2) the battery pack reaches the overtemperature threshold;

further optionally wherein the undervoltage threshold is 2V per battery cell and/or wherein the overtemperature threshold is 70°C.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

| BATTERY PACK Specification | | |
|---|---|---|
| Battery Cell Configuration | 5S1P | 5S2P |
| Battery Pack ID | Level 2 | Level 4 |
| Battery Pack Max. charger current (A) | 8 | 16 |
| | | |
| Battery Cell Voltage - nominal (V) | 3.7 | 3.7 |
| Battery Cell Voltage - operating (V) | 2.0-4.2 | 2.0-4.2 |
| Battery Cell Current - rated (A) | 45 | 45 |
| Battery Cell Current - max. (A) | 432.92 | 432.92 |
| Battery Cell Impedance - DCR (m$\Omega$) | 9 | 9 |
| Battery Cell Capacity (Ah) | 4 | 4 |
| Battery Cell Energy (kJ) | 60.48 | 60.48 |
| Battery Cell Power - nominal (W) | 166.5 | 166.5 |
| Battery Cell Power - peak (W) | 938.57 | 938.57 |
| | | |
| Battery Pack Voltage - nominal (V) | 18.5 | 18.5 |
| Battery Pack Voltage - operating (V) | 10.0-21.0 | 10.0-21.0 |
| Battery Pack Current - rated (A) | 32.5 | 60 |
| Battery Pack Impedance - 10A (m$\Omega$) | 62.7 | 32.9 |
| Battery Pack Impedance - 40A (m$\Omega$) | 48.9 | 28.3 |
| Battery Pack Capacity (Ah) | 4 | 8 |
| | | |
| Battery Pack Energy-full charge (kJ) | 302.4 | 604.8 |
| Delivered Energy-CC - @60A before thermal trip (kJ) | 245.47 | 491.79 |
| Delivered Energy-CC/Battery Pack Energy-full charge | 0.812 | 0.813 |
| Delivered Energy-CP - @1050W before thermal trip (kJ) | | 492.43 |
| Delivered Energy-CP/Battery Pack Energy-full charge | | 0.814 |
| | | |
| Battery Pack Power - nominal (W) | 832.5 | 1665 |
| Battery Pack Power - peak (W) | 4692.85 | 9385.71 |
| Delivered Power-CC (W) | | 1022.4 |
| Delivered Power-CP (W) | 600 | 1050 |
| | | |
| Battery Pack Length (mm) | 130.67 | 130.67 |
| Battery Pack Width (mm) | 84.66 | 84.66 |
| Battery Pack Height (mm) | 57.86 | 80.5 |
| | | |
| Box Volume (L) | 0.640 | 0.891 |
| Pack Displacment Volume (L) | 0.393 | 0.642 |
| Cell Holder Subassembly Volume (L) | 0.151 | 0.297 |
| | | |
| Pack Energy-full charge/box volume (kJ/L) | 472.443 | 679.144 |
| Delivered Energy-CC/box volume (kJ/L) | 383.504 | 552.242 |
| Pack Energy-full charge/pack displacement volume (kJ/L) | 769.466 | 942.122 |
| Delivered Energy-CC/pack displacement volume (kJ/L) | 624.611 | 766.082 |
| Pack Energy-full charge/CHS volume (kJ/L) | 2007.182 | 2035.500 |
| Delivered Energy-CC/CHS volume (kJ/L) | 1629.322 | 1655.156 |
| | | |
| Pack Power - nominal/CHS volume (W/L) | 5525.724 | 5603.68 |
| Pack Power - peak/CHS volume (W/L) | 31148.84 | 31588.30 |
| Pack Power - delivered power-CP/CHS volume (W/L) | 3982.50 | 3533.85 |
| | | |
| Pack Power - race condition/Pack Power-nominal | 0.721 | 0.631 |
| | | |
| Battery Pack Cycle Life to 75% Init Cap (30A) | 900 | 1000 |

FIG. 14

FIG. 15A

Race Condition - Constant Current (60A)

Energy delivered before thermal trip – race condition – constant current

Pack 1

| | |
|---|---|
| Time Elapsed (S) | 481.02 |
| $Current_{CC}$ (A) | 60 |
| $Voltage_{RMS}$ (V) | 17.04 |
| Delivered $Power_{CC}$ (W) | 1022.40 |
| Delivered $Energy_{CC}$ (kJ) | 491.79 |

Constant (nominal) current ($Current_{CC}$) for purposes of determining delivered $energy_{CC}$ is the set point for the electric load in the race condition-constant current procedure.

Delivered $Energy_{CC}$ (kJ) = $Current_{CC}$ x $Voltage_{RMS}$ x time x energy/capacity-time

FIG. 15B

EP 4 697 481 A2

Race Condition - Constant Power (1050W)

FIG. 16A

— Current    — Voltage    - - - Temperature

Energy delivered before thermal trip – race condition – constant power

Pack 1

| | |
|---|---|
| Time Elapsed (S) | 468.98 |
| Current$_{RMS}$ (A) | 61.50 |
| Voltage$_{RMS}$ (V) | 17.10 |
| Delivered Power$_{RMS}$ (W) | 1051.65 |
| Delivered Energy$_{RMS}$ (kJ) | 493.20 |
| Delivered Power$_{CP}$ (W) | 1050 |
| Delivered Energy$_{CP}$ (kJ) | 492.43 |

Constant (nominal) power (Power$_{CP}$) for purposes of determining delivered energy$_{CP}$ is the set point for the electric load in the race condition-constant power procedure.

Delivered Energy$_{CP}$ (kJ) = Power$_{CP}$ x time x energy/capacity-time

FIG. 16B

**Cycle Life, 8A Step Charge**

Discharge Capacity (Ah) vs Cycle Life

▲ Test pack 1   ● Test pack 2   ▲ Test pack 3

● Test pack 4   ▲ Test pack 5   ● Test pack 6

FIG. 17A

EP 4 697 481 A2

Cycle Life, 8A Step Charge

FIG. 17B

**EP 4 697 481 A2**

**Patent documents cited in the description**

• US 63682131